# EUROPEAN PATENT SPECIFICATION

(11) **EP 0 378 660 B1**
(45) Date of publication and mention of the grant of the patent: **13.12.1995**
(21) Application number: 89908130.1
(22) Date of filing: 15.06.1989
(51) Int. Cl.: G06F 9/44, G06F 17/30

(54) **INFERENCE SYSTEM USING A STABLE STORAGE RULE AND FACT DATABASE**
INFERENZSYSTEM MIT STABILER REGEL- UND FAKTDATENBASIS-SPEICHERUNG
SYSTEME D'INFERENCES UTILISANT UNE BASE DE DONNEES DE REGLES ET DE FAITS A STOCKAGE STABLE

(30) Priority: 30.06.1988 US 213549
(43) Date of publication of application: 25.07.1990
(73) Proprietor: DIGITAL EQUIPMENT CORPORATION, Maynard, Massachusetts 01754 (US)
(72) Inventor: LANDERS, Terry, Ann, Wilmington MA 01887 (US)
(74) Representative: Goodman, Christopher
(86) International application number: US8902833
(87) International publication number: WO9000279

(56) References cited:
- 6th Annual International Phoenix Conference on Computers and Communications, February 25-27, 1987, Scottsdale Arizona, IEEE (New York, US), R. Chau et al.: "A framework for knowledge based systems in nial", pages 286-291.
- ICL Technical Journal, vol. 5, no. 3, May 1987 (Oxford, GB) J. Bocca: "Logic languages and relational databases: the design and implementation of Educe", pages 425-450.
- The 13th Annual International Symposium on Computer Architecture, June 2-5, 1986, Tokyo, IEEE (New York, US) H. Yokota et al.: "A model and an architecture for a relational knowledge base"
- IEEE Expert, vol. 3, no. 2, Summer 1988, IEEE (New York, US) G.E. Kaiser et al.: "Database support for knowledge-based engineering environments", pages 18-32.

## Description

### BACKGROUND OF THE INVENTION

### 1. Field of the Invention

The invention relates generally to the field of artificial intelligence, and more specifically to a system for manipulating rules and facts during an inference cycle.

### 2. Description of the Prior Art

Rule-based artificial intelligence systems, generally known as expert systems, typically include a set of rules, forming a "knowledge base", one or more facts, and an inference engine that manipulates the rules in response to the facts. Typical artificial intelligence systems include two general types of rules, namely, forward-chaining rules and backward-chaining rules, with the inference engine including a forward-chaining inference portion that operates in conjunction with the forward-chaining rules and a backward-chaining inference portion that operates in conjunction with the backward-chaining rules.

A forward-chaining rule is used to conclude new facts from a set of facts. More specifically, in response to a change of facts, the inference engine attempts to match conditions in each of the forward-chaining rules to the facts. If the conditions of a particular forward-chaining rule match the facts, the rule is said to "fire", and the inference engine then performs actions or operations specified in the rule. These operations may include, for example, addition, deletion and/or modification of facts, transmission of results to a user, and so forth. If, during processing of a forward-chaining rule, the inference engine adds, deletes or modifies a fact, the inference engine repeats these operations in response to the new or modified facts in the database, which may, in turn, cause other rules to fire. Forward-chaining rule processing proceeds iteratively until no further additions, modifications or deletions occur in connection with the facts.

A backward-chaining rule, on the other hand, is used to determine, given a conclusion, termed a goal or predicate, whether the predicate is supported by the facts, and may also identify the facts which support the predicate. A backward-chaining rule identifies the facts which are required to support the predicate. In addition, a backward-chaining rule may also identify other predicates, termed sub-goals, which, in turn, identify other backward-chaining rules which are also required to support the predicate. Since each sub-goal may, in turn, contain other sub-goals, backward-chaining rule processing proceeds, iteratively processing rules relating to all of the sub-goals, until all sub-goals are satisfied, at which point the main goal is determined to be supported by the facts.

In a typical expert system, the facts and rules are maintained by the inference engine in virtual memory as the expert system is running. In such systems, sharing of facts and rules among a plurality of operators is difficult. In addition, recovery from errors or a breakdown of the digital data processing system processing the expert system may be very difficult. In other prior art systems, retrieval of rules from a database is not selective according to information in a rule retrieval request.

IEEE 6th Annual International Phoenix Conference on Computers and Communications, 1987, pages 286-291; R. Chau et al: "A framework for knowledge based systems in Nial" describes a knowledge based system in which the rules and facts of the knowledge base are separated so that existing databases of facts can be used in the reasoning process. The rules are, however, stored within the architecture of an inference engine for access by a single user.

ICL Technical Journal, vol 5, no. 3, May 1987, pages 425-450; J Bocca: "Logic languages and relational databases: the design and implementation of Educe" describes a knowledge based system in which both facts and rules may be stored in the database, but all rules are stored in one relation without organization of the information in the rules in any manner.

IEEE 13th Annual International Symposium on Computer Architecture, 1986, pages 2-9; H Yokota et al: "A model and an architecture for a relational knowledge base" describes a knowledge based system in which facts and rules are stored together in a relation. A unification engine is used to sort terms retrieved from the relation, omitting irrelevant combinations.

### SUMMARY OF THE INVENTION

The invention, as set out in apparatus claim 1 and in method claim 39, provides a new and improved expert system for manipulating rules and facts during an inference cycle.

In brief summary, the new system includes a database system, a knowledge request translator, and an inference system. The database system includes a plurality of storage locations for storing facts and rules. The knowledge request translator, in response to rule retrieval requests, retrieves rules from the database system, with the rule retrievals being based on rule selection criteria that are included in the rule requests. The inference system generates rule retrieval requests, including rule selection criteria, for use by the knowledge request translator. In addition, the inference system performs inference operations in connection with rules retrieved by said knowledge request translator. The inference system initiates matching operations in connection with patterns in the rules. The knowledge request translator, during a matching operation, enables the database system to perform a match, and provides a response to the inference system to indicate whether the match was successful. The inference system determines whether the rules are satisfied based on the responses from the knowledge request translator during the matching operations.

By storing the rules and facts in a database system, rather than in the virtual memory of the inference system, several advantages are achieved. Since, as is common, the database system may be shared among a number of operators, the rules may be also be shared among a number of operators. In addition, typical database management systems provide extensive capabilities to resolve concurrency of access requests and to facilitate recovery from errors, which are not available in typical expert systems. Furthermore, since the rules that are retrieved from the database and moved into the virtual memory of the inference system are only the ones likely to fire as indicated by the selection criteria that accompanied the rule retrieval request, the storage area need not be sufficiently large as to be able to store all of the rules. The virtual memory for the inference system need only be large enough to store the rules that are likely to fire, as retrieved by the knowledge request translator.

### BRIEF DESCRIPTION OF THE DRAWINGS

This invention is pointed out with particularity in the appended claims. The above and further advantages of this invention may be better understood by referring to the following description taken in conjunction with the accompanying drawings, in which:
Fig. 1 is a general functional block diagram depicting the major functional modules of a system constructed in accordance with the invention;
Figs. 2A and 2B are useful in understanding the structure of forward chaining rules and backward chaining rules, respectively, in the system depicted in Fig. 1;

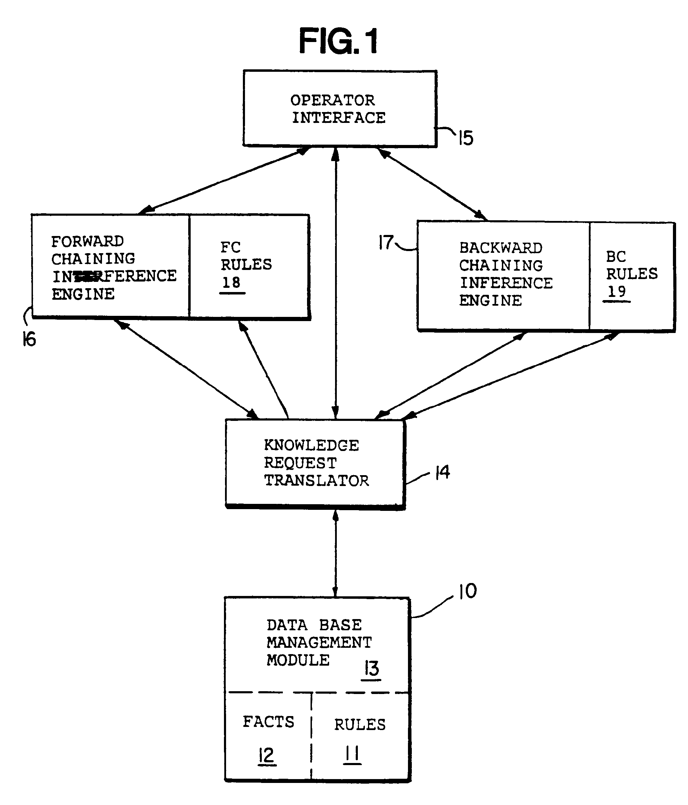

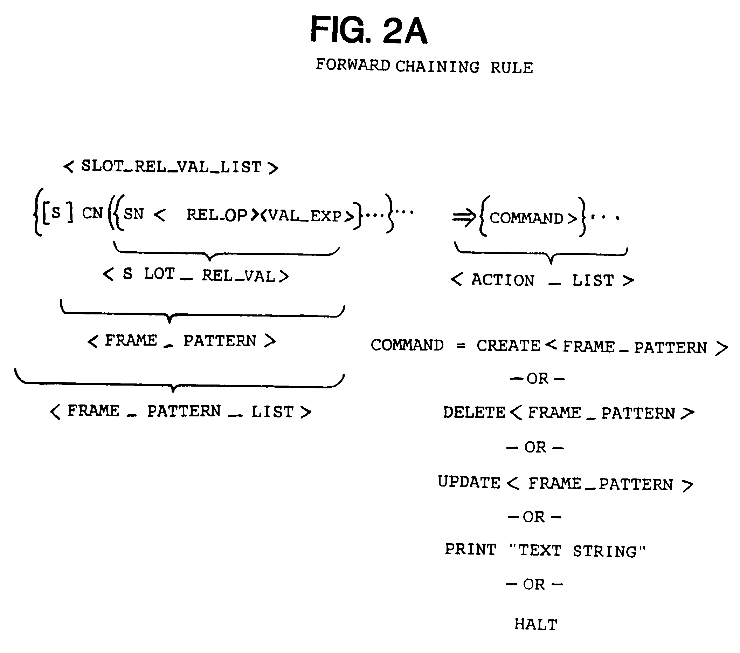

Figs. 3A-1 and 3A-2 depict the data structure of a forward chaining rule, as depicted in Fig. 2A, as stored in the data base module depicted in Fig. 1;

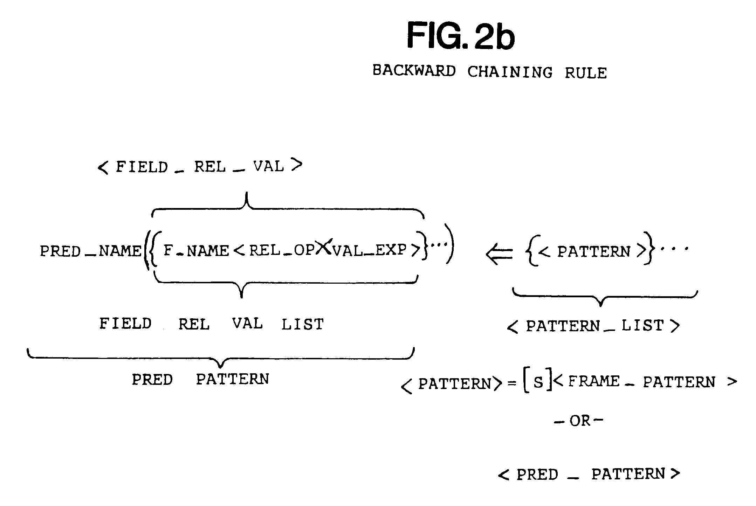

Figs. 3B-1 and 3B-2 depict the data structure of a backward chaining rule, as depicted in Fig. 2B, as stored in the data base module depicted in Fig. 1;

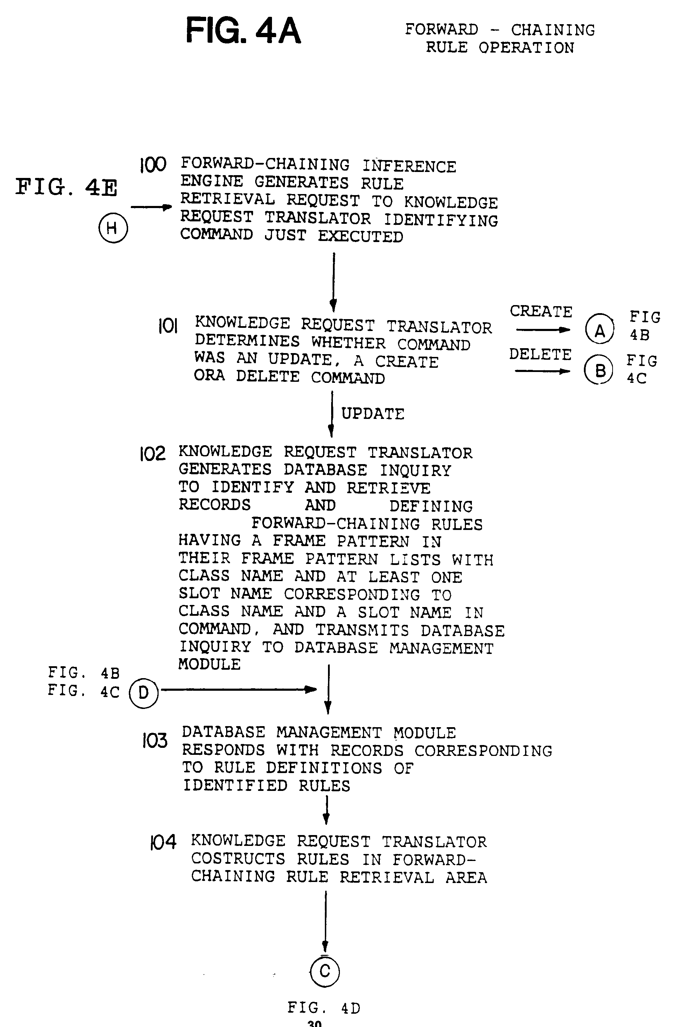

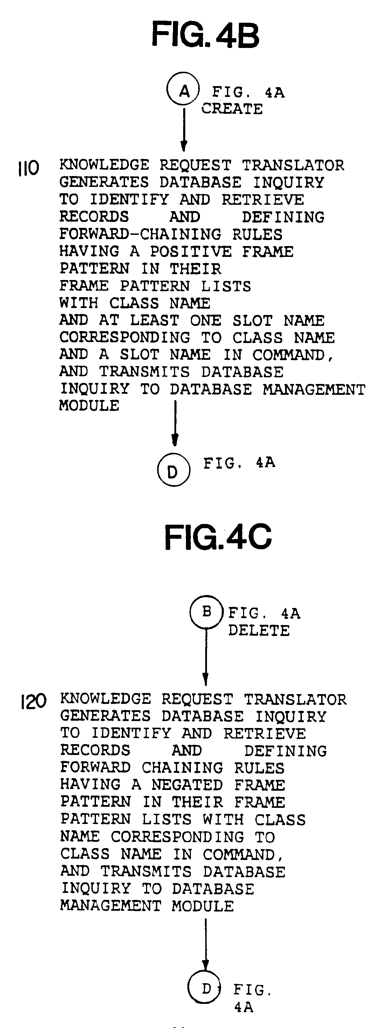

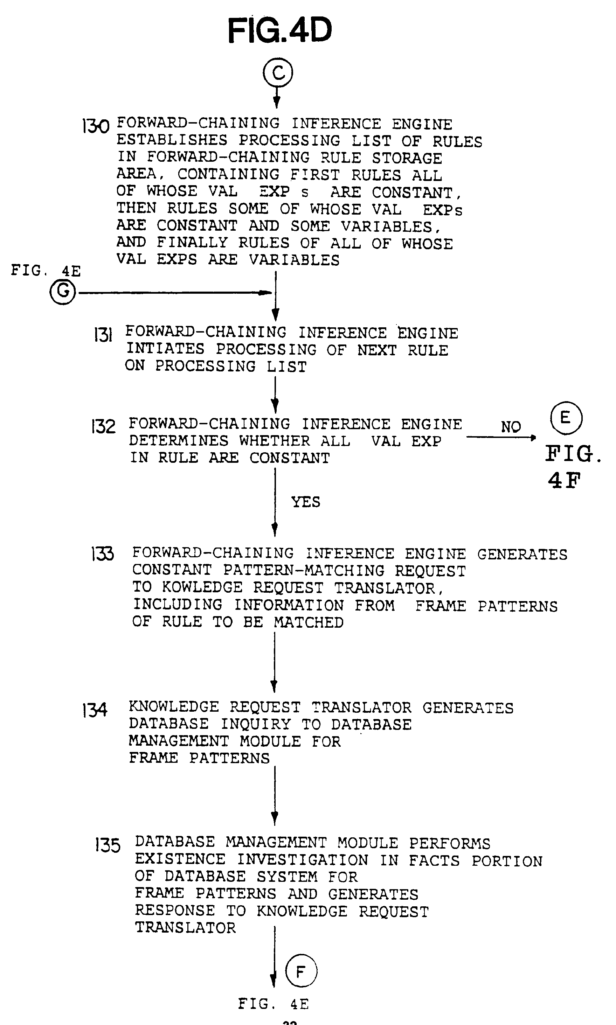

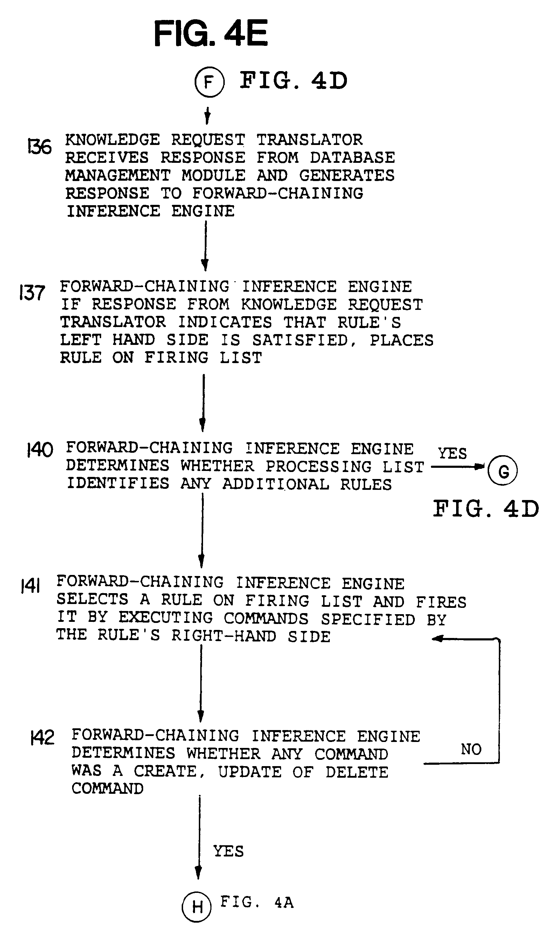

Figs. 4A through 4F depict flow diagrams useful in understanding the operation of the system depicted in Fig. 1 during forward-chaining rule processing; and

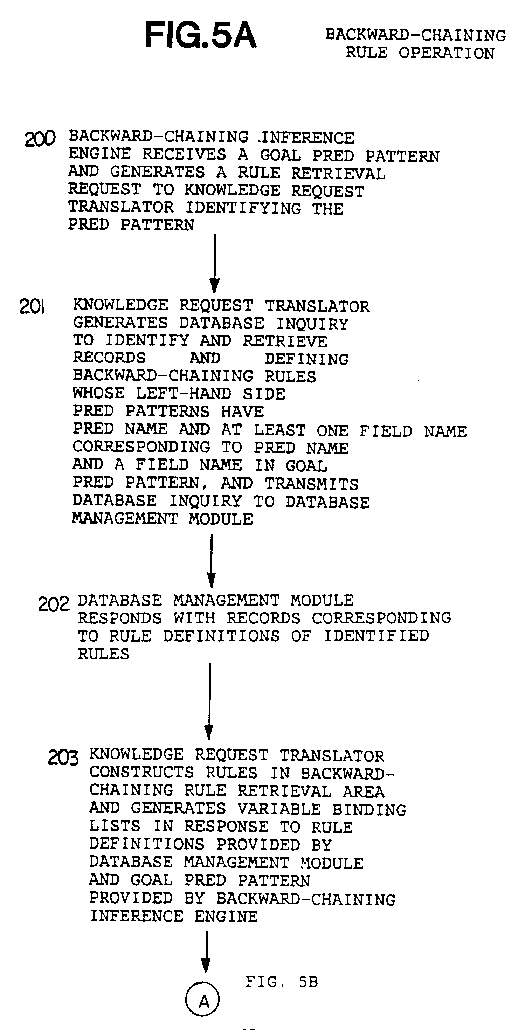

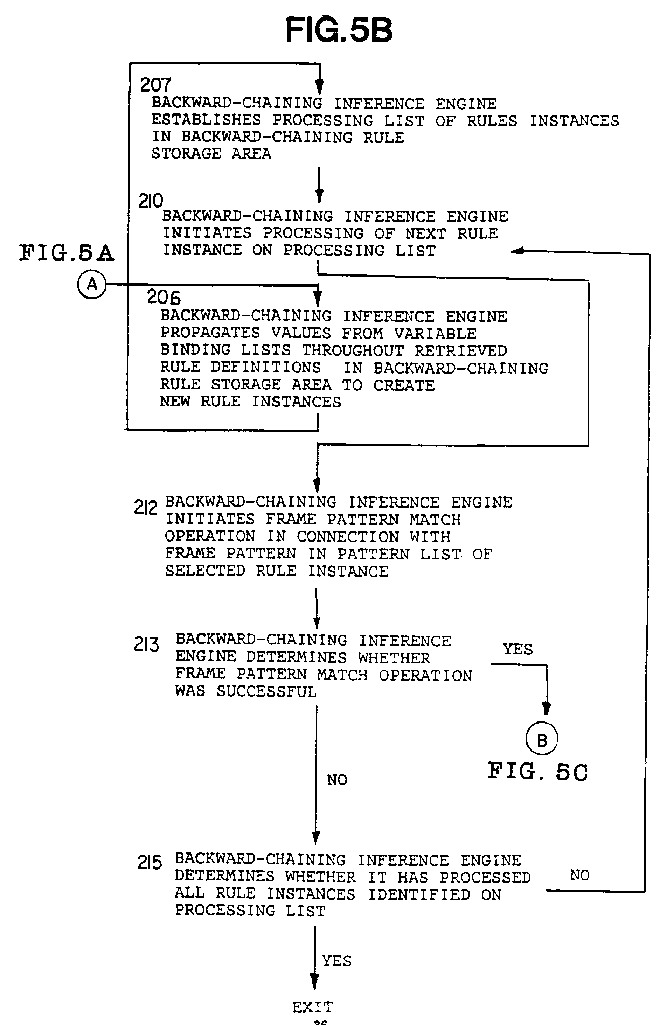

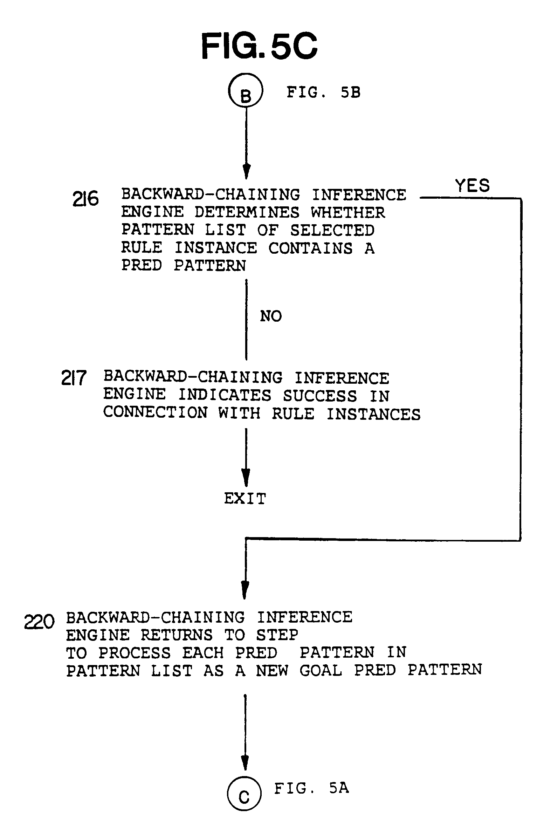

Figs. 5A through 5C depict flow diagrams useful in understanding the operation of the system depicted in Fig. 1 during backward-chaining rule processing.

### DETAILED DESCRIPTION OF AN ILLUSTRATIVE EMBODIMENT

### 1. General Description

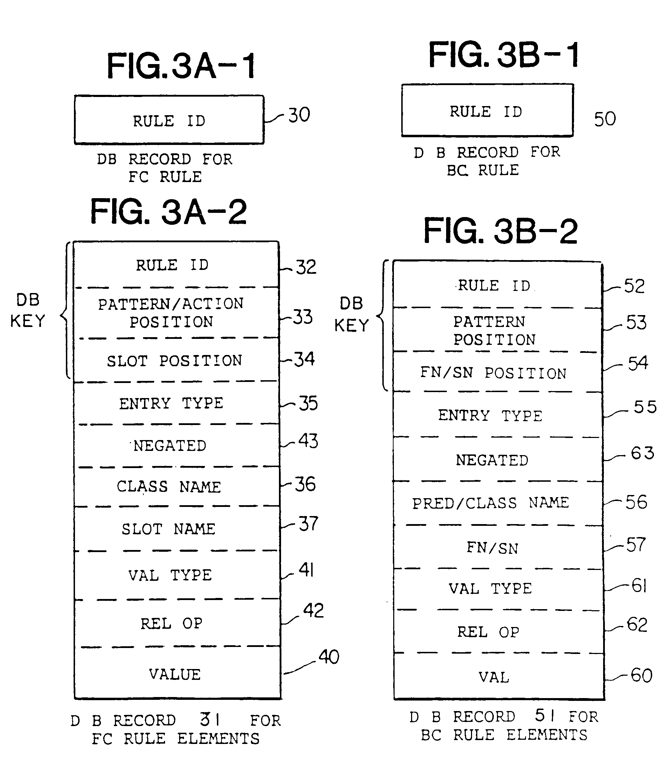

Fig. 1 is a general functional block diagram depicting the major functional modules of a system constructed in accordance with the invention. With reference to Fig. 1, the system includes a database system 10 which stores both rules and facts. In the embodiment depicted in Fig. 1, the rules are stored in a rules portion 11 and facts are stored in a facts portion 12. In the database system 10, both the rules and facts are stored as database records. The detailed structure of database records in which rules are stored are described below in connection with Figs. 3A-1 through 3B-2. The rules portion 11 and facts portion 12 of database system 10 are both controlled by a data base management module 13, which receives inquiries from a knowledge request translator 14, processes them, during which it may retrieve data from, or store data in, either the rules portion 11 or the facts portion 12 of the database system 10. In addition, if the inquiry is a retrieval operation, the data base management module 13 returns the data, which may relate to either a fact or a rule, to the knowledge request translator 14.

The knowledge request translator 14, in turn, operates in response to requests from an inference system comprising a forward-chaining inference engine 16 and a backward-chaining inference engine 17, or from an operator interface 15. The operator interface 15 may update facts in, modify or load rules into, or exercise the rules in, the database system 10 through the knowledge request translator 14. The forward-chaining inference engine 16, in response to selected operations initiated by an operator through the operator interface, performs forward-chaining inference operations in connection with forward-chaining rules stored in the rules portion 11 of database system 10. The backward-chaining inference engine 17 performs, in response to backward-chaining inference requests initiated by an operator through the operator interface 15, backward-chaining inference operations in connection with backward-chaining rules stored in the rules section 11 of database system 10.

As described in detail below, during an inference operation initiated by the forward-chaining inference engine 16, the knowledge request translator 14 first requests the data-base system 10 to identify all of the rules in rules portion 11 of the database system 10 which might fire based on the facts in the facts portion 12 of the database system 10 and as initiated by the command just executed. The knowledge request translator 14 then enables the database system 10 to retrieve the rules which may fire from the rules portion 11 of the database system 10, and transfer them to the knowledge request translator 14. Upon receiving the rules from the database system 10, the knowledge request translator 14 assembles them in a forward chaining rules storage area 18 for processing by the forward chaining inference engine 16.

The forward-chaining inference engine separately processes each of the rules assembled in the forward chaining rules storage area 18. In processing each rule, the forward-chaining inference engine 16 initiates pattern matching operations, which are processed by the knowledge request translator 14 and the database system 10, in connection with all of the various patterns which form the conditions in the rule. If the forward-chaining inference engine determines that a rule's conditions are satisfied, it fires the forward-chaining rule, that is, it executes the command or commands that are specified in the forward-chaining rule. The execution of the command may change the facts in the database, which may, in turn, initiate further forward-chaining inference operations.

Similarly, during an inference operation initiated by the backward-chaining inference engine 17 in response to a request from the operator interface 15, the knowledge request translator 14 first requests the database system 10 to select and retrieve all of the rules in rules portion 11 of the database system 10 which might prove the goal received from the operator interface 15. The knowledge request translator 14 then retrieves the rules from the rules portion 11 of the database system 10, and assembles them in a backward-chaining rules storage area 19 for processing by the backward chaining inference engine 17.

The backward-chaining inference engine 17 processes each of the backward-chaining rules iteratively. During processing of each backward-chaining rule, the backward-chaining inference engine 16 initiates pattern matching operations, which are processed by the knowledge request translator 14 and the database system 10, in connection with all of the various patterns which form the goal predicates and frame patterns in the rule. If the backward-chaining inference engine determines that the frame patterns are satisfied, it initiates processing of the sub-goal predicates in the same manner, and proceeds until all of the sub-goal predicates are satisfied, in which case it reports to the operator interface 15 that the goal predicate has been proven, along with the facts which prove the goal predicate, or until it determines that a sub-goal predicate cannot be proven, in which case it reports to the operator interface 15 that the goal predicate cannot be proven.

By storing the rules and facts in a database system a number of advantages are achieved. The database management system permits the rules and facts to be sharable among a number of operators. In addition, since typical database management systems provide extensive capabilities to resolve concurrency of access requests and to facilitate recovery from errors, these facilities, which are not available in typical expert systems, are available in the system depicted in Fig. 1.

Furthermore, since the forward- and backward-chaining rules that are moved into the respective storage areas 18 and 19 are only the ones likely to fire or to prove the current goal or sub-goal predicate, the storage areas need not be sufficiently large as to be able to store all of the forward-chaining and backward-chaining rules, respectively. Since typically the rules storage areas are in the virtual memories of the respective inference engines 16 and 17, the virtual memories need only be large enough to store the rules supplied by the knowledge request translator 14.

### 2. Specific Description

### Rule Description

Before proceeding further, it will be helpful to describe a forward-chaining rule and a backward-chaining rule, after which a description of the data structures in which the rules are stored in the rules portion 11 of the database system 10 will be presented, along with a description of operation of the knowledge request translator 14, forward-chaining inference engine 16, backward-chaining inference engine 17 and database system 10. With reference to Fig. 2A, a forward-chaining rule comprises a left-hand side, identified as a <FRAME_PATTERN_LIST>, and a right-hand side, identified as an <ACTION_LIST>. The <FRAME_PATTERN_LIST> includes one or more elements defining conditions which, if they evaluate to TRUE based on the facts in the facts portion 12 of database system 10, indicates that the command or commands specified in the <ACTION_LIST> are to be performed, and if they evaluate to FALSE, indicates that the command or commands specified in the <ACTION_LIST> are not to be performed.

The conditions in the <FRAME_PATTERN_LIST> of a forward-chaining rule are defined by one or more <FRAME_PATTERN>s, which, in turn, are defined by a CN classname and includes one or more <SLOT_REL_VAL>s slot relational value(s) which together form a <SLOT_REL_VAL_LIST>. Each <SLOT_REL_VAL> in a <SLOT_REL_VAL_LIST>, is identified by an SN slot name, and includes a <REL_OP> relational operator and <VAL_EXP> value expression, which may define either a constant value or a value defined by a variable. The facts in the facts portion 12 of database system 10 are stored in logical classes. Each class contains a plurality of entries, with the entries, in turn, having, a plurality of slots which contain the facts.

Each class in facts portion 12 is identified by a class name, and the slots in the entries in a class are identified by a slot name. In a <SLOT_REL_VAL>, the <VAL_EXP> identifies a particular value, and the <REL_OP> relates the value of the <VAL_EXP> to the contents of the slot in the class identified by the CN class name in the facts portion 12 of the database system 10. The <REL_OP> relational operator may, for example, indicate equality, inequality, greater than or less than. Each CN class name in a <FRAME_PATTERN> identifies a class in the facts portion 12. Furthermore, each SN slot name in a <SLOT_REL_VAL> identifies a slot in the class in the facts portion 12 identified by the CN class name identified by the <FRAME_PATTERN> which contains the <SLOT_REL_VAL>.

The determination of whether the <FRAME_PATTERN_LIST> of a forward-chaining rule is satisfied, such that the rule will be deemed to fire, depends upon an evaluation of each <FRAME_PATTERN> in the <FRAME_PATTERN_LIST> in conjunction with the value of the S sign associated with the <FRAME_PATTERN>. The S sign, if positive, indicates that the condition represented by the <FRAME_PATTERN> is satisfied if there exists, in the facts portion 12 of data-base system 10, at least one entry in the class identified by the CN class name associated with the <FRAME_PATTERN>, in which the slots have the relationships set forth in all of the <SLOT_REL_VAL>s slot relational values in the <SLOT_REL_VAL_LIST> slot relational value list associated with the <FRAME_PATTERN>. On the other hand, if the S sign associated with the <FRAME_PATTERN> is negative, the condition represented by the <FRAME_PATTERN> is satisfied if no such entry exists in the class. Otherwise, the condition represented by the <FRAME_PATTERN> is not satisfied. The <FRAME_PATTERN_LIST> is satisfied only if all of the <FRAME_PATTERN>s in the forward-chaining rule are satisfied.

As noted above, if the <FRAME_PATTERN_LIST> is satisfied, the command or commands in the <ACTION_LIST> are executed. In one embodiment, five types of commands may be executed, namely, CREATE, DELETE, UPDATE, PRINT and HALT. The CREATE, DELETE and UPDATE commands enable facts to be stored in, deleted from, or modified in the facts portion 12 of the database system 10. The PRINT and HALT commands, on the other hand, enable specific system operations to occur. More specifically, a CREATE command enables an entry to be added to a class, identified in the command, in the facts portion 12 of database system 10. A DELETE command enables an entry to be deleted from a class, as identified in the command, in the facts portion 12 of the database system 10. An UPDATE command enables new values to be stored in an entry, as identified in the command, in the class, as also identified in the command in the facts portion 12 or the database system 10. A PRINT command enables a text string, which is contained in the command, to be displayed by the operator interface 15. Finally, a HALT command enables the system to halt the current forward-chaining operation.

A backward-chaining rule is depicted in Fig. 2B. With reference to Fig. 2B, a backward-chaining rule comprises a left-hand side, identified as a <PRED_PATTERN> predicate pattern, and a right-hand side, identified as a <PATTERN_LIST>. The <PATTERN_LIST>, in turn, includes one or more <FRAME_PATTERN>s, each with an associated S sign, and/or one or more <PRED_PATTERN>s predicate patterns. The <PRED_PATTERN> predicate pattern comprising the left-hand side of the backward-chaining rule identifies the goal to be proven, and is used, as described below in connection with Figs. 5A through 5C, to identify the backward-chaining rules which may prove the goal. The <FRAME_PATTERN>s on the right-hand side identify facts which tend to prove or disprove the goal, and the <PRED_PATTERN>s predicate patterns on the right-hand side identify sub-goals which must be satisfied, by means of other backward-chaining rules identified thereby, to prove the goal.

A <PRED_PATTERN> predicate pattern, on either the lefthand side or the right-hand side of a backward-chaining rule, includes a <FIELD_REL_VAL_LIST> field relational value list which includes one or more <FIELD_REL_VAL>s field relational values. Each <PRED_PATTERN> predicate pattern is identified with a PRED_NAXE predicate name, and each <FIELD_REL_VAL> field relational value is identified with a F_NAME field name. In a <FIELD_REL_VAL> field relational value, the <VAL_EXP> value expression identifies a particular value or variable, and the <REL_OP> relates the value of the <VAL_EXP> to contents of the facts portion 12 of the database system 10.

The processing of a <FRAME_PATTERN> during processing of a backward-chaining rule to determine whether or not it is satisfied is performed in a similar manner as during processing of a forward-chaining rule.file

### Rule Database Structure

As noted above, the rules, including both the forward-chaining rules and the backward-chaining rules, are defined by one or more database records stored in the rules portion 11 of the database system 10. Figs. 3A-1 through 3B-2 depict data structures in the database system 10 for the rules, with Figs. 3A-1 and 3A-2 depicting the data structures for the forward-chaining rules and Figs. 3B-1 and 3B-2 depicting data structures for the backward-chaining rules. With reference to Fig. 3A-1, the rules portion 11 of the database system 10 includes one rule identification record 30 associated with each forward-chaining rule. The rule identification record 30 includes a single field which includes a rule identification value.

The rules portion 11 also includes one record 31, as depicted in Fig. 3A-2, that is associated with each <SLOT_REL_VAL> slot relational value in a <FRAME_PATTERN> IN either the left-hand side <FRAME_PATTERN_LIST> or a right-hand side <COMMAND>, in a rule. A record 31 includes a number of fields, including a rule identification field 32, a pattern/action position field 33 and a slot position field 34, the contents of all of which serves to identify the record in the context of the rules. Specifically, the contents of the rule identification field 32 identifies the rule of which the associated <SLOT_REL_VAL> slot relational value forms a part. The contents of the pattern/action position field 33 identifies a <FRAME_PATTERN> or <COMMAND> in the <FRAME_PATTERN_LIST> or <ACTION_LIST> of the rule. Finally, the slot position field 34 identifies a <SLOT_REL_VAL> slot relational value in the <SLOT_REL_VAL_LIST> slot relational value list in the <FRAME_PATTERN> in either the left-hand side or the command in the right hand side. The triple formed by the values in the rule identification field 32, pattern/action position field 33 and slot position field 34 uniquely identify the location of the <SLOT_REL_VAL> slot relational value within a specific rule, and thus also serves to uniquely identify the record 31 in the rules portion 11 of database system 10.

The record 31 also has a number of additional fields. In particular, the contents of an entry type field 35 identifies whether the record relates to the left-hand side or the right-hand side of a forward-chaining rule (Fig. 2A), and, if it relates to the right-hand side, identifies the type of command, that is, it indicates whether the command is a CREATE, DELETE, UPDATE, PRINT, or HALT command.

If the record relates to the left-hand side, the contents of a class name field 36 and a slot name field 37 identify a class and slot, respectively, in the facts portion 12 of the database system 10. The contents of a value field 40 and value type field indicate a value and value type, that is, whether the value contained in the value field 40 is a constant or variable, and the contents of a relational operator field 42 identify a relational operator. In processing a <SLOT_REL_VAL> slot relational value in the left-hand side of a forward-chaining rule, the value contained in the value field 40 is compared, using a relational operator identified by the contents of relational operator field 42, to the contents of the slot of the facts portion 12 of the database system 10 identified by the slot name field 37 in the class identified by the class name field 36.

On the other hand, if the record relates to the right-hand side of a forward-chaining rule, the contents of a class name field 36 and a slot name field 37 identify a class and slot, respectively in the facts portion 12 of the database system 10, and the contents of a value field 40 and value type field indicate a value and value type, that is, whether the value contained in the value field 40 is a constant, variable or a text string that may be transmitted to the operator interface 15 for display to the operator in response to a PRINT command. If the rule fires, that is, if the left-hand side is satisfied, if the command is a CREATE command, a new entry is created in the class identified by the contents of the class name field 36, and the contents of the value field 40 is stored in a slot therein identified by the contents of the slot name field 37. If the command is a DELETE command, entries, identified by the <FRAME_PATTERN> which includes the <SLOT_REL_VAL> slot relational value defined by the record 31, are deleted. Similarly, if the command is an UPDATE command, the contents of the value field 40 are stored in the slot identified by the slot name field 37 in the class identified by the class name field 36.

As described above, Figs. 3B-1 and 3B-2 depict data structures for the backward-chaining rules. With reference to Fig. 3B-1, the rules portion 11 of the database system 10 includes one rule identification record 50 associated with each backward-chaining rule. The rule identification record 50 includes a single field which includes a rule identification value.

The rules portion 11 also includes one record 51, as depicted in Fig. 3B-2, associated with each <FIELD_REL_VAL> field relational value in a <PRED_PATTERN> predicate pattern in either the right-hand side or the left-hand side and with each <SLOT_REL_VAL> slot relational value in a <FRAME_PATTERN> on the right-hand side. The structure of a record 51 is similar to the structure of a record 31. In particular, the record 51 includes a number of fields, including a rule identification field 52, a pattern position field 53 and a field name/slot name position field 54, the contents of all of which serves to identify the record in the context of the rules. Specifically, the contents of the rule identification field 52 identify the rule which includes the <FIELD_REL_VAL> field relational value or <SLOT_REL_VAL> slot relational value defined by the record. The contents of the pattern position field 53 identifies a <PRED_PATTERN> predicate pattern or <PATTERN> in the <PRED_PATTERN> or <PATTERN_LIST> of the rule. Finally, the field name/slot name position field 54 identifies a <FIELD_REL_VAL> field relational value in the <FIELD_REL_VAL_LIST> field relational value list in the <PRED_PATTERN> predicate pattern in the left-hand side or the <PATTERN> in the <PATTERN_LIST> in the right hand side. The triple formed by the values in the rule identification field 52, pattern position field 53 and field name/slot name position field 54 uniquely identify the location of the <FIELD_REL_VAL> field relational value or <SLOT_REL_VAL> slot relational value within a specific rule, and thus also serves to uniquely identify the record 51 in the rules portion 11 of database system 10.

The record 51 also has a number of additional fields. In particular, the contents of an entry type field 55 identifies whether the record relates to the left-hand side or the right-hand side of a backward-chaining rule (Fig. 2B), and, if the record relates to the right-hand side, whether the <PATTERN> is a <FRAME_PATTERN> or a <PRED_PATTERN> predicate pattern. If the record relates to a the right-hand side and the <PATTERN> is a <FRAME_PATTERN>, a negated field 63 indicates whether the <FRAME_PATTERN> is negated, which, in turn, indicates that the S sign associated with the <FRAME_PATTERN> is negative.

The record 51 also includes a predicate/class name field 56 and a field/slot name field 57 whose contents, if they relate to a <FRAME_PATTERN> identify a slot in a class in the facts portion 12 of the database system 10. The contents of a value field 60 and value type field 61 indicate a value and value type, that is, whether the value contained in the value field 60 is a constant or variable, and the contents of a relational operator field 62 identify a relational operator.

### Rule Processing

### 1. Forward-Chaining Rules

As described above, in the forward-chaining rules used in the system depicted in Fig. 1, three types of commands, namely, the CREATE, DELETE and UPDATE commands, may be executed, either in response to a command from the operator interface 15 or in response to processing of another forward-chaining rule, which enable the modification of the contents of the facts portion 12 of the database system 10. In response to any of these commands, the forward-chaining inference engine and knowledge request translator 14 perform the operations generally set forth in the flowchart depicted in Figs. 4A through 4F to process forward-chaining rules which may fire as a result of the command. On the other hand, in response to the receipt of a goal from the operator interface 15, the backward-chaining inference engine 17 and knowledge request translator 14 perform the operations generally set forth in Figs. 5A through 5C to determine whether the goal can be satisfied, that is, whether the goal can be proven to be true.

With reference to Figs. 4A through 4F, the forward-chaining inference engine 16, along with the knowledge request translator 14 and the database management module 13, initially selects the forward-chaining rules likely to fire, retrieves records 31 relating thereto from the rules portion 11 of the database system 10, constructs the rules and loads the constructed rules into the forward-chaining rules storage area 18. The criteria for selecting the rules likely to fire depend upon the type of command which was executed to give rise to the forward-chaining inference operation. In particular, if the command was an UPDATE command (Fig. 4A), the rules selected are those that contain a <FRAME_PATTERN> that have a CN class name and SN slot name that correspond to the class name and slot name in the <FRAME_PATTERN> in the command, since those are the only ones that might fire based on the updated information loaded into the facts portion 12 of the database system 10 in response to the UPDATE command.

On the other hand, if the command was a CREATE command (Fig. 4B), the rules selected are those that contain a <FRAME_PATTERN> that have a positive S sign and a CN class name and a SN slot name that correspond to the class name and slot name in the <FRAME_PATTERN> in the command, since those rules are the only ones that might fire based on the added entry in the class identified by the CN class name.

Finally, if the command was a DELETE command (Fig. 4C), the rules selected are those that contain a <FRAME_PATTERN> that have a negative S sign and a CN class name that corresponds to the class name in the <FRAME_PATTERN> in the command. The only rules that will fire in response to the DELETE command are the ones in which an entry does not exist in the class identified by the CN class name, thus the S sign must be negative.

With this background, and with reference to Fig. 4A, in initiating the retrieval of the rules likely to fire in response to execution of a command, the forward-chaining inference engine 16 first generates a rule retrieval request for transmission to the knowledge request translator 14 that includes the command just executed (step 100). The knowledge request translator then determines the type of command that was included in the rule retrieval request (step 101). If the command was an UPDATE command, the knowledge request translator 14 generates a database inquiry for the data base management module 13 that enables the data base management module 13 to identify rules which have, in their lefthand sides, a <FRAME_PATTERN> that has a CN class name and at least one slot with a SN slot name corresponding to the CN class name and SN slot name in the rule retrieval request (step 102).

The data base management module 13 receives the data-base inquiry generated by the knowledge request translator 14 in step 102 and proceeds to process it. In that processing, the data base management module 13 performs a search operation based on the rules identified in record 30, searching through the records 31 in the rules portion 11 to determine if any have a class name field 36 and slot name field whose contents correspond to the CN class name and SN slot name in the database inquiry from the knowledge request translator 14. If any such rules exist in the rules portion 11 of database system 10, the data base management module 13 responds with the records corresponding to the rule definitions of the rules which it identified during the search (step 103). In response to the receipt of the response from the data base management module 13, the knowledge request translator 14 proceeds to construct the rules in the forward-chaining rules storage area 18 (step 104) for subsequent processing by the forward-chaining inference engine 16.

As described above, the rule identification and retrieval procedure differs if the command was a CREATE command or a DELETE command. With reference to Fig. 4B, if the command was a CREATE command, the knowledge request generator 14 sequences from step 101 to step 110, in which it generates a database inquiry which identifies the S sign value as positive, and a CN class name and a SN slot name which it obtained from the CREATE command, and transfers the database inquiry to the database management module 13. Thereafter, the sequence continues with step 103 (Fig. 4A).

On the other hand, with reference to Fig. 4C, if the command was a DELETE command, from step 101 (Fig. 4A) the knowledge request translator 13 sequences to step 120, in which it generates a database inquiry which identifies the S sign value as negative, and a CN class name which it obtained from the DELETE command, and transfers the database inquiry to the database management module 13. Thereafter, the sequence continues with step 103 (Fig. 4A).

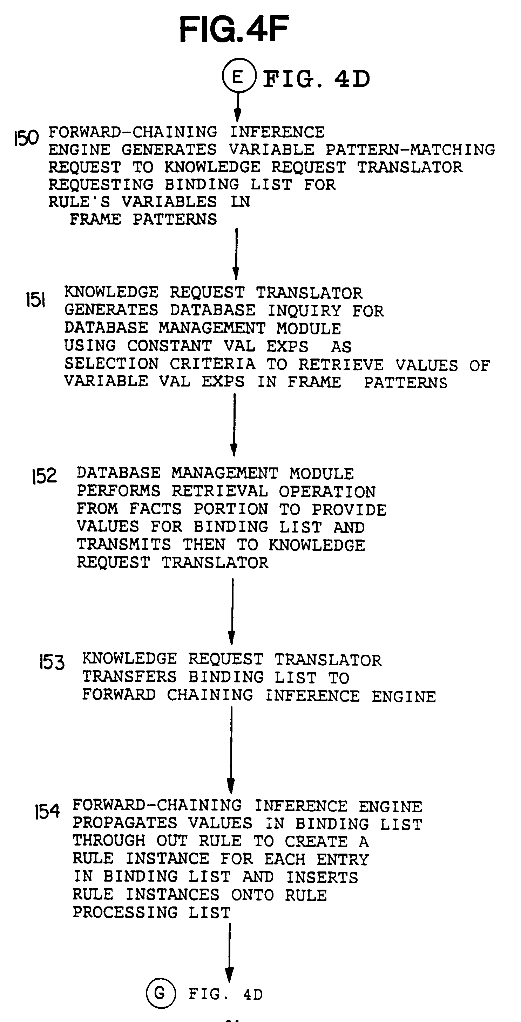

After the knowledge request translator 14 has constructed the rules likely to fire in the forward-chaining rules storage area 18, the forward-chaining inference engine 16 steps to a sequence, shown in Figs. 4D through 4F, in which it, in conjunction with the knowledge request translator 14 and data base management module 13, processes the rules in the forward-chaining rules storage area 18 to determine which of them fire, based on the facts in the facts portion 12 of database system 10, and fires those which it determines are to fire.

With reference to Fig. 4D, in this operation the forward-chaining inference engine 16 first establishes a processing list, in which it lists the order in which it will process the rules in the forward-chaining rules storage area 18 (step 130). In one embodiment, the forward-chaining inference engine 16 first processes the rules in which the <VAL_EXP> value expressions are all constants, followed by the rules in which some of the <VAL_EXP>s value expressions are constants and some variables, and finally the rules in which all of the <VAL_EXP>s are variables.

The forward-chaining inference engine 16 iteratively initiates processing of each of the rules in the order identified on the processing list. During the first iteration, the forward-chaining inference engine 16 selects for processing the first rule on the processing list (step 131). If all of the <VAL_EXP>s value expressions in the rule are constants (step 132), the forward-chaining inference engine 16 generates a constant pattern-matching request to the knowledge request translator 14 (step 133). The pattern-matching request identifies, for each <FRAME_PATTERN> in the rule's <FRAME_PATTERN_LIST>, the S sign, CN class name, SN slot names, and the <REL_OP> relational operator and <VAL_EXP> value expression in each <SLOT_REL_VAL>.

The knowledge request translator 14 receives the constant pattern-matching request from the forward-chaining inference engine 16 and generates a database inquiry for the <FRAME_PATTERN>s in the constant pattern-matching request, which it transmits to the data base management module 13 (step 134). The database inquiry requests the data base management module 13 to indicate, for each <FRAME_PATTERN>, whether an entry exists in the class identified by the CN class name, which contains slots identified by the SN slot names all of which contain values related to the values identified by the <VAL_EXP>s value expressions by the relational operators identified by the <REL_OP> relational operators in the pattern-matching request. The data base management module 13 them performs an existence investigation, as described above, to determine if such entries exist, and generates a response for the knowledge request translator 14 (step 135). The response indicates whether or not such entries exist for all of the <FRAME_PATTERN>s, thereby indicating whether or not the <FRAME_PATTERN_LIST> is satisfied.

Upon receiving the response from the data base management module 13 for the <FRAME_PATTERN>s, the knowledge request translator 14generates a response so indicating for transmission to the forward-chaining inference engine 16 (step 136). If the response from the knowledge request translator 14 indicates that the <FRAME_PATTERN_LIST> of the rule being processed is satisfied, the forward-chaining inference engine 16 places the rule onto a firing list, or agenda (step 137).

Following step 137, the forward-chaining inference engine 16 inspects the processing list to determine whether it identifies any further rules to be processed (step 140). If the processing list does identify further rules to be processed, the forward-chaining inference engine 16 returns to step 131 to process the next rule. However, if the processing list does not identify any further rules, the forward-chaining inference engine 16 sequences to steps 141 and 142, in which it fires the rules on the firing list. If the <ACTION_LIST> of a fired rule includes a CREATE, UPDATE or DELETE command, the forward-chaining inference engine 16 returns to step 100 (Fig. 4A) to identify any additional rules to be fired in response thereto.

As described above, the forward-chaining inference engine 16, in step 132, determines whether the rule being processed has any <FRAME_PATTERN>s which includes a <VAL_EXP> value expression which defines a variable value. If the rule does have a <FRAME_PATTERN> with a <VAL_EXP> value expression which does define a variable value, the forward-chaining inference engine 16 diverts to the sequence depicted on Fig. 4F to determine binding lists for the variable values, to convert them into constant values which the forward-chaining inference engine 16 processes as described above in connection with steps 133 through 137 and 140 through 142.

With reference to Fig. 4F, if the rule being processed has a <FRAME_PATTERN> with at least one <VAL_EXP> value expression having a variable value, the forward-chaining inference engine 16 sequences to step 150, in which it generates a variable pattern-matching request to the knowledge request translator 14 requesting a binding list for the variable <VAL_EXP>s value expressions in the <FRAME_PATTERN>s in the <FRAME_PATTERN_LIST>. The knowledge request translator 14 generates a database inquiry to obtain values for the binding list, which it transmits to the data base management module 13 (step 151). The data base management module 13 performs a retrieval operation to retrieve values from the facts portion 12 of the database system 10 to provide values for the binding list, and transmits the values to the knowledge request translator 14 (step 152), which, in turn, transfers them to the forward-chaining inference engine 16 (step 153). The forward-chaining inference engine 16 then propagates the values in the binding list through the rule to create new rule instances (step 154). After propagation, all of the rule instances have <FRAME_PATTERN>s in which all of the <VAL_EXP>s value expressions contain constant values. At that point, the forward-chaining inference engine 16 returns to step 133 and, in steps 134 through 137 and 140 through 142, processes each of the rule instances as a separate rule.

### 2. Backward-Chaining Rules

As described above, in response to a backward-chaining command from the operator interface 15, which identifies a goal, or <PRED_PATTERN> predicate pattern, the backward-chaining inference engine 17 initiates a backward-chaining inference operation, which is depicted in detail in Figs. 5A through 5C. During the backward-chaining inference operation, the backward-chaining inference engine 17 first initiates operations, which are depicted in Fig. 5A, to effect retrieval of those backward-chaining rules in rules portion 11 of database system 10 which are likely to prove the goal, which backward-chaining rules are stored in the backward-chaining rule storage area 19.

After the rules have been retrieved, the backward-chaining inference engine 17 initiates processing operations, depicted in Figs. 5B through 5C, in connection with the each of the rules in the backward-chaining rule storage area 19 and the contents the facts portion 12 of database system 10, to determine whether any of the rules are satisfied. If at least one rule is satisfied, the top-level goal from the operator interface 15 is deemed proven true.

During the processing of each backward-chaining rule, the backward-chaining inference engine 17 initiates pattern matching operations in connection with <FRAME_PATTERN>s, all of which are on the right-hand side. In addition, if the matching operation is successful, the backward-chaining inference engine 17 processes each <PRED_PATTERN> predicate pattern on the right-hand side, which defines a sub-goal, in the same manner as a top level goal received from the operator interface 15. The procedure is repeated iteratively for each <PRED_PATTERN> predicate pattern in a rule defining the top-level goal through each succeeding sub-goal level, the bottom level sub-goal being defined by a backward-chaining rule in which the right-hand side contains only <FRAME_PATTERN>s.

The various sub-goal levels essentially defines a tree, with each sub-goal at a given level being satisfied if at least one sub-goal therebeneath is shown to be satisfied. The backward-chaining inference engine 17, in proceeding down the tree, continues until either:
(1) a rule is reached in which a right-hand side <FRAME_PATTERN> does not match the facts in the facts portion 12 of database system 10, in which case the sub-goal will not satisfied by the rule along that branch; the backward-chaining inference engine 17 then tries another rule to satisfy the sub-goal, if one exists, or returns to the next-higher sub-goal for the same purpose; or
(2) a rule is reached at a sub-goal level in which the right-hand side is only <FRAME_PATTERN>s which match the facts in the facts portion 12 of the database system 10, in which case the bottom level sub-goal along that branch is satisfied; the backward-chaining inference engine 17 then returns to the next higher sub-goal to process other <PRED_PATTERN>s predicate patterns in the next-higher sub-goal.

If the backward-chaining inference engine 17 determines (1) that all of the <FRAME_PATTERN>s in the rule defining the top level goal are satisfied by the facts in the facts portion 12 of the database system 10, and (2) that all of the <PRED_PATTERN>s predicate patterns in a rule defining the top level goal are satisfied, the backward-chaining inference engine 17 reports to the operator interface 15 that the goal has been proven.

With reference to Fig. 5A, the backward-chaining inference engine 17 initially receives the <PRED_PATTERN> predicate pattern and generates a rule retrieval request, which it transmits to the knowledge request translator 14 (step 200). The backward-chaining inference engine 17 supplies, in the rule retrieval request, the <PRED_PATTERN> predicate pattern which it received from the operator interface 15 in initiating the backward-chaining operation.

Upon receiving the rule retrieval request from the backward-chaining inference engine 17, the knowledge request translator 14 generates a database inquiry which identifies the predicate name and field names, and transfers the data-base inquiry to the data base management module 13 (step 201). The data base management module 13 performs a search operation similar to that described above in connection with step 103 (Fig. 4A) to identify backward-chaining rules in rules portion 11 of database system 10 having a left-hand side <PRED_PATTERN> predicate pattern which has a PRED_NAME predicate name and at least one F_NAME field name corredsponding to those set forth in the database inquiry, it responds with the records 50 and 51 relating to the rule definitions of the identified backward-chaining rules (step 202). After the data base management module 13 has responded with the records 51 (step 204), the knowledge request translator 14 constructs the rules in the backward-chaining rule storage area 19, along with binding lists for the variables in the left-hand side (that is, the goal) <PRED_PATTERN> predicate pattern (step 203).

After the knowledge request translator 14 has constructed the backward-chaining rules in the backward-chaining rule storage area 19 and provided the binding lists, the backward-chaining inference engine 17 the backward-chaining inference engine 17 creates a rule instance for each entry in the binding list associated with the rule, and propagates the variable values in the entry through the associated rule instance (step 206). The backward-chaining rule engine then establishes a processing list of the rule instances (step 207) in any convenient order. The processing list may, for example, first list the rules which have only <FRAME_PATTERN>s, and no <PRED_PATTERN>s predicate patterns, on the right-hand side, since those rules have no sub-goals and may be most easily processed.

The backward-chaining inference engine 17 then initiates processing of the first rule instance on the processing list (step 210). The backward-chaining inference engine 17 initiates a frame pattern matching operation in connection with the <FRAME_PATTERN>s of the selected rule instance (step 212). The matching operations initiated by the backward-chaining inference engine 17 are similar to the operations described above in connection with Figs. 4D through 4F. If the backward-chaining inference engine 17 determines that the match operation was not successful, that is if it determines that, for at least one <FRAME_PATTERN>, the facts in the facts portion 12 of the database system 10 did not satisfy the <FRAME_PATTERN>, the backward-chaining inference engine 17 returns to step 211 to process any additional rule instances on the processing list (step 215). If all of the rules on the processing list have been processed, the backward-chaining inference engine exits.

If, however, the backward-chaining inference engine 17 determines in step 213 that the match operations in connection with all of the <FRAME_PATTERN>s of the rule instance are satisfied, it sequences to step 216 to determine whether the rule instance contains a right-hand side <PRED_PATTERN> predicate pattern. If not, in indicates that the rule instance is satisfied (step 217), thereby indicating that the goal at that level was successful. The backward-chaining inference engine 17 returns an indication that the goal has been satisfied, which may, if the goal was a top level goal, enable it to transmit a success indication to the operator interface 15, or, if the goal was not a top level goal, enable it to return to the next higher level to process the next <PRED_PATTERN> predicate pattern for the rule at that level.

As noted above, a benefit of the system depicted in Figs. 1 through 5C is that, since the rules, including both the forward-chaining rules and the backward-chaining rules, are stored in the database system 10, since, as is common, the database system 10 may be shared among a number of operators, the rules may be also be shared among a number of operators. In addition, typical database management systems provide extensive capabilities to resolve concurrency of access requests and to facilitate recovery from errors, which are not available in typical expert systems. Furthermore, since the forward- and backward-chaining rules that are moved into the respective storage areas 18 and 19 are only the ones likely to fire, the storage areas need not be sufficiently large as to be able to store all of the forward-chaining and backward-chaining rules, respectively. Since typically the rules storage areas are in the virtual memories of the respective inference engines 16 and 17, the virtual memories need only be large enough to store the rules that are likely to fire, as determined by the knowledge request translator 14.

## Claims

1. A data processing apparatus comprising:
A. a database system (10) including a plurality of records for storing facts (12) and rules (11), each one of said rules containing information that is evaluated when an inference operation is performed in connection with said rule, said information being stored in at least one field of a record in which said rule is stored, said database system being accessible by a plurality of operators to allow each one of said operators to cause said facts and rules to be retrieved from said database system, said database system including means for managing access to said database system to resolve conflicting requests by said operators for access to said rules;
B. a knowledge request translator (14) responsive to rule retrieval requests for generating database requests to enable the retrieval of rules from said database system, each rule retrieval request being based on rule selection criteria included in said rule retrieval request, each one of said database requests causing retrieval of a rule if said information stored in a field of the record in which said rule is stored corresponds to information found in said rule selection criteria of the rule retrieval request from which said database request was generated; and
C. an inference system (16,17), responsive to commands from each one of said operators, for generating said rule retrieval requests, including said rule selection criteria, and for performing inference operations in connection with rules retrieved from said database system (10) by said knowledge request translator (14), said inference system enabling the retrieval of facts from said database system for use with the inference operations.

2. Apparatus as defined in claim 1 in which said inference system includes a rule storage area (18,19) for storing rules and an inference engine (16,17), said inference engine generating rule retrieval requests and performing inference operations in connection with rules stored in said rule storage area, said knowledge request translator storing rules retrieved in response to rule retrieval requests in said rule storage area.

3. Apparatus as defined in claim 1 in which said inference system includes:
A. a rule retrieval request portion that generates rule retrieval requests, each including said rule selection criteria; and
B. a rule processing portion that performs inference operations in connection with the rules retrieved by the knowledge request translator in response to the rule retrieval request.

4. Apparatus as defined in claim 3, wherein said information contained in said rule identifies at least one relational operation in connection with a fact in said database system and a value expression in said rule, in which said rule processing portion includes:
A. a constant processing portion for processing rules whose value expressions are constant values in connection with facts in said database system to identify a logical conclusion;
B. a variable processing portion for processing rules whose value expressions are variable values in connection with facts in said database system to generate a binding list to identify the values of said variable value expressions which provide a selected logical conclusion; and
C. a control portion for controlling the operation of said constant processing portion and said variable processing portion.

5. Apparatus as defined in claim 4 in which said control portion first enables said constant processing portion to process rules all of whose value expressions are constant values and subsequently enables said variable processing portion and said constant processing portion to process rules at least one of whose value expressions are variable values.

6. Apparatus as defined in claim 4 in which:
A. the constant processing portion generates a constant pattern-matching request in response to a rule;
B. the knowledge request translator (14) generates a database inquiry in response to the constant pattern-matching request, the database inquiry identifying the rule; and
C. the database system (10) performs an existence operation in connection with the rule.

7. Apparatus as defined in claim 6 in which a rule identifies a relation by class name and a value, the database system performing the existence operation by determining whether a relation exists which is identified by the class name and which contains the value.

8. Apparatus as defined by claim 7 in which the rule further identifies a slot name associated with the value, the database system further performing the existence operation by determining whether a relation exists which is identified by the class name and slot name and which contains the value.

9. Apparatus as defined in claim 4 in which:
A. the variable processing portion generates a variable pattern-matching request in response to a rule;
B. the knowledge request translator generates a database inquiry in response to the variable pattern-matching request, the database inquiry identifying the rule; and
C. the database system performs a binding list generation operation in connection with the rule to identify variable values.

10. Apparatus as defined in claim 9 in which a rule identifies a relation by class name and a value, the database system performing the binding list generation operation by identifying selected values associated with a relation which is identified by the class name.

11. Apparatus as defined by claim 10 in which the rule further identifies a slot name associated with the value, the database system further performing the binding list generation operation by identifying selected values associated with a relation which is identified by the class name and slot name.

12. Apparatus as defined in claim 1 in which the inference system (16,17) operates in response to commands specified by said rules.

13. Apparatus as defined in claim 12 in which said information contained in each one of said rules comprises a class name, said rule further including an update command that enables information containing a given class name to be updated, the inference system (16) generating a rule retrieval request including the given class name in said rule selection criteria to enable the knowledge request translator to, in turn, generate a database request to enable retrieval of rules from the database system containing the given class name.

14. Apparatus as defined in claim 13 in which the information contained in each one of said rules (11) is stored in a plurality of records (31) each record including a class name field (36), the database system, in response to a database request, retrieving records the contents of whose class name field corresponds to the class name in the rule selection criteria of the rule retrieval request.

15. Apparatus as defined in claim 13 in which at least some of the rules contain information further comprising a slot name, the rule retrieval request generated by the inference system further identifying the slot name in the rule selection criteria which enables the knowledge request translator to, in turn, generate a database request to enable retrieval of rules from the database system containing the class name and the slot name.

16. Apparatus as defined in claim 15 in which the information contained in each one of said rules is stored in a plurality of records (31) each including a class name field (36) and at least some including a slot name field (37), the database system, in response to a database request, retrieving records the contents of whose class name field corresponds to the class name and the slot name in the rule selection criteria of the rule retrieval request.

17. Apparatus as defined in claim 12 in which the information contained in each one of said rules comprises a class name and includes a create command that enables information containing a given class name, to be created, the inference system (16) generating a rule retrieval request identifying the given class name in said rule selection criteria to enable the knowledge request translator to, in turn, generate a database request to enable retrieval of rules from the database system containing the given class name.

18. Apparatus as defined in claim 17 in which the information contained in the rules (11) is stored in a plurality of records (31) each including a class name field, the database system, in response to a database request, retrieving records (31) the contents of whose class name field (36) corresponds to the class name in the rule selection criteria of the rule retrieval request.

19. Apparatus as defined in claim 17 in which at least some of the information contained in the rules further contains a slot name, the rule retrieval request generated by the inference system (16) further identifying the slot name in said rule selection criteria which enables the knowledge request translator to, in turn, generate a database request to enable retrieval of rules from the database system containing the class name and the slot name.

20. Apparatus as defined in claim 19 in which the information contained in said rule are stored in a plurality of records (31) each including a class name field (36) and at least some including a slot name field (37), the database system, in response to a database request, retrieving records the contents of whose class name field corresponds to the class name in the rule selection criteria of the rule retrieval request and the slot name in the rule retrieval request.

21. Apparatus as defined in claim 12 in which the information contained in the rules comprises a class name and includes a delete command that enables information containing a given class name to be deleted, the inference system generating a rule retrieval request identifying the given class name in said rule retrieval criteria to enable the knowledge request translator to, in turn, generate a database request to enable retrieval of rules from the database system containing the given class name.

22. Apparatus as defined in claim 21 in which the information contained in said rule is stored in a plurality of records (31) each including a class name field (36) and a negated flag (43), the database system, in response to a database request, retrieves records the contents of whose class name field corresponds to the class name contained in the rule selection criteria in the rule retrieval request and whose negated flags are set.

23. Apparatus as defined in claim 21 in which said information contained in said rule comprises a slot name, the rule retrieval request generated by the inference system further identifying the slot name in said rule selection criteria which enables the knowledge request translator to, in turn, generate a database request to enable retrieval of rules from the database system containing the class name and the slot name.

24. Apparatus as defined in claim 23 in which the information contained in said rule is stored in a plurality of records (31) each including a class name field (36) and at least some including a slot name field (37), the database system, in response to a database request, retrieving records the contents of whose class name field corresponds to the class name and the slot name in the rule selection criteria of the rule retrieval request.

25. Apparatus as defined in claim 12 in which the rules include backward-chaining rules comprising information having a class name, said rules further comprising a backward chaining command, the inference system generating a rule retrieval request including the class name in said rule selection criteria to enable the knowledge request translator to, in turn, generate a database request to enable retrieval of backward-chaining rules from the database system containing the class name.

26. Apparatus as defined in claim 25 in which the said information contained in the rules is stored in a plurality of records (51) each including a class name field (56), the database system, in response to a database request, retrieving records the contents of whose class name field corresponds to the class name in said rule selectin criteria of the rule retrieval request.

27. Apparatus as defined in claim 25 in which said information contained in said rule further comprises a slot name, the rule retrieval request generated by the inference system (16) further identifying the slot name in said rule selection criteria which enables the knowledge request translator to, in turn, generate a database request to enable retrieval of backward-chaining rules from the database system containing the class name and the slot name.

28. Apparatus as defined in claim 27 in which the the rules include backward-chaining rules containing information stored in a plurality of records (51) each including a class name field (56) and at least some including a slot name field (57), the database system, in response to a database request, retrieving records the contents of whose class name field corresponds to the class name and the slot name in said rule selection criteria of the rule retrieval request.

29. Apparatus as defined in claim 1, wherein said information contained in each said rule includes an associated name, relational operation and value expression, each rule retrieval request further including, as the rule selection criteria, a name, said knowledge request translator (14) enabling the retrieval from said database system of rules (11) having information which includes a name corresponding to the name included with the rule retrieval request.

30. Apparatus as defined in claim 29, the name contained in said information having a major portion and a minor portion, each rule retrieval request including, as the selection criteria, a name having a major portion and a minor portion, said knowledge request translator (14) enabling a rule retrieval using both the major portion and minor portion of said name.

31. Apparatus as defined in claim 29 in which said database system includes:
A. a rule storage portion (11) including a plurality of records (31,51) each for storing said information contained in each said rule, said record including a name field (36,37,56,57) for storing a name, and
B. a database management portion for retrieving the contents of said rule storage portion in response to database requests from said knowledge request translator each including a name in said rule selection criteria, the database management portion retrieving records from said rule storage portion the contents of whose name fields correspond to the name in said database requests.

32. Apparatus as defined in claim 31 in which each record (31,51) further includes a rule identification field (32,52) for storing the identification of a rule, said knowledge request translator (14) enabling the database management portion (13) to retrieve, in response to a database request, all of the records relating to the rule identified by the contents of the record including the name retrieved in response to the database request.

33. Apparatus as defined in claim 32, said record (31,51) further including a sequence identification field (34,54) identifying the sequence of said information in said rule, said knowledge request translator (14) including a rule assembly portion for assembling a rule in the order identified in the sequence identification field in response to the receipt of the records relating to the rule, the assembled rule to thereafter be used by the inference system in connection with an inference operation.

34. Apparatus as defined in claim 1 further comprising a rule virtual memory (18,19), said knowledge request translator (14) storing the retrieved rules in said rule virtual memory, and said inference system performing said inference operations in connection with said rules stored in said rule virtual memory.

35. Apparatus as defined in claim 34, said information contained in each said rule including an associated name, relational operation and value expression, each rule retrieval request further including, as the rule selection criteria, a name, rule retrieval step including the step of determining whether a rule includes a name corresponding to the name included with the rule retrieval request.

36. Apparatus as defined in claim 35, the name associated with said information having a major portion and a minor portion and each rule retrieval request including, as the rule selection criteria, a name having a major portion and a minor portion, the rule retrieval step including the steps of determining whether a rule includes information which includes a major portion which corresponds to the major portion of said selection criteria and said rule value expression element which includes a minor portion which corresponds to the minor portion of said selection criteria.

37. Apparatus as defined in claim 35 in which said database system includes
(i) a rule storage portion including a plurality of records (31,51) each for storing information contained in a rule, said record including a name field (36,37,56,57) for storing a name and a rule identification field (32,52) for storing the identification of a rule, and
(ii) a database management portion (13) for retrieving the contents of said rule storage portion (11) in response to database requests from said knowledge request translator (14) each including a name in said rule selection criteria, the database management portion retrieving records from said rule storage portion the contents of whose name fields correspond to the name in said database requests, said rule retrieval step including the step of retrieving, in response to a database request, all of the records relating to the rule identified by the contents of the record including the name retrieved in response to the database request.

38. Apparatus as defined in claim 37, said record further including a sequence identification field (34,54) identifying the sequence of said information in said rule, said rule retrieval step including the step of assembling a rule, using the contents of the sequence identification field of the retrieved records in response to the receipt of the records relating to the rule.

39. A method comprising the steps of:
A. maintaining a database system including a plurality of records (31,51) for storing facts (12) and rules (11), each one of said rules containing information that is evaluated when an inference operation is performed in connection with said rule, said information being stored in at least one field in a record in which said rule is stored;
B. permitting each one of a plurality of operators to access said database system to cause said facts and rules to be retrieved therefrom and managing access to said database system to resolve conflicting requests by said operators for access to said rules;
C. generating a rule retrieval request including rule selection criteria in response to commands from each one of said operators;
D. retrieving a rule from said database system in response to the rule selection criteria if said information stored in a field of the record in which said rule is stored corresponds to information found in said rule selection criteria of the rule retrieval request; and
E. performing an inference operation in connection with rules retrieved in response to the rules selecion criteria and in connection with facts from said database system.

40. A method as defined in claim 39, said information contained in each said rule including a rule element identifying at least one relational operation in connection with a fact in said database system and a value expression in said rule, in which the inference operation performance step includes the steps of:
A. processing rule elements of rules all of whose rule elements include value expressions which are constant values in connection with facts in said database system to identify a logical conclusion;
B. processing rule elements which contain value expressions that include variable values, of rules which include rule elements whose value expressions include variable values, in connection with facts in said database system to generate a binding list to identify the values of said variable value expressions which provide a selected logical conclusion; and
C. processing rule elements which contain value expressions that include constant values, of rules which include rule elements whose value expressions include variable values, in connection with facts in said database system to provide the selected logical conclusion.

## Patentansprüche

1. Datenverarbeitungsgerät, das folgendes aufweist:
A. ein Datenbasissystem (10) einschließlich einer Vielzahl von Datensätzen zum Speichern von Fakten (12) und Regeln (11), wobei jede der Regeln Informationen enthält, die ausgewertet werden, wenn eine Inferenzoperation in Verbindung mit der Regel durchgeführt wird, wobei die Informationen in wenigstens einem Feld eines Datensatzes gespeichert sind, in dem die Regel gespeichert ist, wobei auf das Datenbasissystem durch eine Vielzahl von Bedienern zugegriffen werden kann, wodurch jedem Bediener erlaubt wird, zu veranlassen, daß die Fakten und Regeln aus dem Datenbasissystem wiedergewonnen werden, wobei das Datenbasissystem eine Einrichtung zum Verwalten eines Zugriffs auf das Datenbasissystem enthält, um konkurrierende Anfragen von den Bedienern nach einem Zugriff zu den Regeln aufzulösen;
B. einen Wissensanfrageumsetzer (14), der auf RegelWiedergewinnungsanfragen zum Erzeugen von Datenbasisanfragen antwortet, um die Wiedergewinnung von Regeln aus dem Datenbasissystem zu ermöglichen, wobei jede Regel-Wiedergewinnungsanfrage auf Regelauswahlkriterien basiert, die in der Regel-Wiedergewinnungsanfrage enthalten sind, wobei jede der Datenbasisanfragen eine Wiedergewinnung einer Regel veranlaßt, wenn die Informationen, die in einem Feld des Datensatzes gespeichert sind, in dem die Regel gespeichert ist, Informationen entsprechen, die in den Regelauswahlkriterien der Regel-Wiedergewinnungsanfrage gefunden werden, aus der die Datenbasisanfrage erzeugt wurde; und
C. ein Inferenzsystem (16,17), das auf Befehle von jedem der Bediener antwortet, zum Erzeugen der Regel-Wiedergewinnungsanfragen, einschließlich der Regelauswahlkriterien, und zum Durchführen von Inferenzoperationen in Verbindung mit Regeln, die aus dem Datenbasissystem (10) durch den Wissensanfrageumsetzer (40) wiedergewonnen werden, wobei das Inferenzsystem die Wiedergewinnung von Fakten aus dem Datenbasissystem zur Verwendung bei den Inferenzoperationen ermöglicht.

2. Gerät nach Anspruch 1, wobei das Inferenzsystem einen Regelspeicherungsbereich (18, 19) zum Speichern von Regeln und eine Inferenzmaschine (16, 17) enthält, wobei die Inferenzmaschine RegelWiedergewinnungsanfragen erzeugt und Inferenzoperationen in Verbindung mit im Regelspeicherungsbereich gespeicherten Regeln durchführt, wobei der Wissensanfrageumsetzer in Antwort auf RegelWiedergewinnungsanfragen wiedergewonnene Regeln im Regelspeicherungsbereich speichert.

3. Gerät nach Anspruch 1, wobei das Inferenzsystem folgendes enthält:
A. einen Regel-Wiedergewinnungsanfrageteil, der RegelWiedergewinnungsanfragen erzeugt, von denen jede die Regelauswahlkriterien enthält; und
B. einen Regel-Verarbeitungsteil, der Inferenzoperationen in Verbindung mit den durch den Wissensanfrageumsetzer in Antwort auf die Regel-Wiedergewinnungsanfrage wiedergewonnenen Regeln durchführt.

4. Gerät nach Anspruch 3, wobei die in der Regel enthaltenen Informationen wenigstens eine Relations-Operation in Verbindung mit einem Fakt in dem Datenbasissystem und einem Wertausdruck in der Regel identifizieren, wobei der Regel-Verarbeitungsteil folgendes enthält:
A. einen Konstanten-Verarbeitungsteil zum Verarbeiten von Regeln, deren Wertausdrücke konstante Werte sind, in Verbindung mit Fakten in dem Datenbasissystem, um eine logische Schlußfolgerung zu identifizieren;
B. einen Variablen-Verarbeitungsteil zum Verarbeiten von Regeln, deren Wertausdrücke variable Werte sind, in Verbindung mit Fakten in dem Datenbasissystem, um eine Verbindungsliste zu erzeugen, um die Werte der variablen Wertausdrücke zu identifizieren, die eine ausgewählte logische Schlußfolgerung schaffen; und
C. einen Steuerteil zum Steuern der Operation des Konstanten-Verarbeitungsteils und des Variablen-Verarbeitungsteils.

5. Gerät nach Anspruch 4, wobei der Steuerteil zuerst dem Konstanten-Verarbeitungsteil ermöglicht, Regeln zu verarbeiten, deren sämtliche Wertausdrücke konstante Werte sind, und nachfolgend dem Variablen-Verarbeitungsteil und dem Konstanten-Verarbeitungsteil ermöglicht, Regeln zu verarbeiten, von denen wenigestens ein Wertausdruck ein variabler Wert ist.

6. Gerät nach Anspruch 4, wobei:
A. der Konstanten-Verarbeitungsteil in Abhängigkeit von einer Regel eine Konstantenmuster-Übereinstimmungsanfrage erzeugt;
B. der Wissensanfrageumsetzer (14) in Abhängigkeit von der Konstantenmuster-Übereinstimmungsanfrage eine Datenbasisuntersuchung erzeugt, wobei die Datenbasisuntersuchung die Regel identifiziert; und
C. das Datenbasissystem (10) eine Existenzoperation in Verbindung mit der Regel durchführt.

7. Gerät nach Anspruch 6, wobei eine Regel eine Relation durch einen Klassennamen und einen Wert identifiziert, wobei das Datenbasissystem die Existenz-operation durch Bestimmen durchführt, ob eine Relation existiert, die durch den Klassennamen identifiziert ist und die den Wert enthält.

8. Gerät nach Anspruch 7, wobei die Regel weiterhin einen zu dem Wert gehörenden Schlitznamen identifiziert, wobei das Datenbasissystem die Existenzoperation weiterhin durch Bestimmen durchführt, ob eine Relation existiert, die durch den Klassennamen und den Schlitznamen identifiziert ist und die den Wert enthält.

9. Gerät nach Anspruch 4, wobei:
A. der Variablen-Verarbeitungsteil in Abhängigkeit von einer Regel eine Variablenmuster-Übereinstimmungsanfrage erzeugt;
B. der Wissensanfrageumsetzer in Abhängigkeit von der Variablenmuster-Übereinstimmungsanfrage eine Datenbasisuntersuchung erzeugt, wobei die Datenbasisuntersuchung die Regel identifiziert; und
C. das Datenbasissystem eine Verbindungslisten-Erzeugungsoperation in Verbindung mit der Regel durchführt, um Variablenwerte zu identifizieren.

10. Gerät nach Anspruch 9, wobei eine Regel eine Relation durch einen Klassennamen und einen Wert identifiziert, wobei die Datenbasis die Verbindungslisten-Erzeugungsoperation durch Identifizieren ausgewählter Werte durchführt, die zu einer Relation gehören, die durch den Klassennamen identifiziert ist.

11. Gerät nach Anspruch 10, wobei die Regel weiterhin einen zu dem Wert gehörenden Schlitznamen identifiziert, wobei das Datenbasissystem weiterhin die Verbindungslisten-Erzeugungsoperation durch Identifizieren ausgewählter Werte durchführt, die zu einer Relation gehören, die durch den Klassennamen und den Schlitznamen identifiziert ist.

12. Gerät nach Anspruch 1, wobei das Inferenzsystem (16, 17) in Antwort auf durch die Regeln bestimmte Befehle arbeitet.

13. Gerät nach Anspruch 12, wobei die in jeder der Regeln enthaltenen Informationen einen Klassennamen aufweisen, wobei die Regel weiterhin einen Erneuerungsbefehl enthält, der ermöglicht, daß einen gegebenen Klassennamen enthaltende Informationen erneuert werden, wobei das Inferenzsystem (16) eine Regel-Wiedergewinnungsanfrage erzeugt, die den gegebenen Klassennamen in den Regelauswahlkriterien enthält, um dem Wissensanfrageumsetzer zu ermöglichen, in Folge eine Datenbasisanfrage zu erzeugen, um eine Wiedergewinnung von Regeln aus dem Datenbasissystem zu ermöglichen, das den gegebenen Klassennamen enthält.

14. Gerät nach Anspruch 13, wobei die in jeder der Regeln (11) enthaltenen Informationen in einer Vielzahl von Datensätzen (31) gespeichert ist, wobei jeder Datensatz ein Klassennamenfeld (36) enthält, wobei das Datenbasissystem in Antwort auf eine Datenbasisanfrage Datensätze wiedergewinnt, deren Klassennamenfeld-lnhalte dem Klassennamen in den Regelauswahlkriterien der Regel-Wiedergewinnungsanfrage entsprechen.

15. Gerät nach Anspruch 13, wobei wenigstens einige der Regeln Informationen enthalten, die weiterhin einen Schlitznamen aufweisen, wobei die durch das Inferenzsystem erzeugte Regel-Wiedergewinnungsanfrage weiterhin den Schlitznamen in den Regelauswahlkriterien identifiziert, was dem Wissensanfrageumsetzer ermöglicht, in Folge eine Datenbasisanfrage zu erzeugen, um eine Wiedergewinnung von Regeln aus dem Datenbasissystem zu ermöglichen, das den Klassennamen und den Schlitznamen enthält.

16. Gerät nach Anspruch 15, wobei die in jeder der Regeln enthaltenen Informationen in einer Vielzahl von Datensätzen (31) gespeichert sind, von denen jeder ein Klassennamenfeld (36) enthält und von denen wenigstens einige ein Schlitznamenfeld (37) enthalten, wobei das Datenbasissystem in Antwort auf eine Datenbasisanfrage Datensätze wiedergewinnt, deren Klassennamenfeld-Inhalte dem Klassennamen und dem Schlitznamen in den Regelauswahlkriterien der Regel-Wiedergewinnungsanfrage entsprechen.

17. Gerät nach Anspruch 12, wobei die in jeder der Regeln enthaltenen Informationen einen Klassennamen aufweisen und einen Erzeugungsbefehl enthalten, der ermöglicht, daß einen gegebenen Klassennamen enthaltende Informationen erzeugt werden, wobei das Inferenzsystem (16) eine Regel-Wiedergewinnungsanfrage erzeugt, die den gegebenen Klassennamen in den Regelauswahlkriterien identifiziert, um dem Wissensanfrageumsetzer zu ermöglichen, in Folge eine Datenbasisanfrage zu erzeugen, um eine Wiedergewinnung von Regeln aus dem Datenbasissystem zu ermöglichen, das den gegebenen Klassennamen enthält.

18. Gerät nach Anspruch 17, wobei die in den Regeln (11) enthaltenen Informationen in einer Vielzahl von Datensätzen (31) gespeichert sind, von denen jeder ein Klassennamenfeld enthält, wobei das Datenbasissystem in Antwort auf eine Datenbasisanfrage Datensätze (31) wiedergewinnt, deren Klassennamenfeld-(36)-Inhalte dem Klassennamen in den Regelauswahlkriterien der Regel-Wiedergewinnungsanfrage entsprechen.

19. Gerät nach Anspruch 17, wobei wenigstens einige der in den Regeln enthaltenen Informationen weiterhin einen Schlitznamen enthalten, wobei die durch das Inferenzsystem (16) erzeugte Regel-Wiedergewinnungsanfrage weiterhin den Schlitznamen in den Regelauswahlkriterien identifiziert, was dem Wissensanfrageumsetzer ermöglicht, in Folge eine Datenbasisanfrage zu erzeugen, um eine Wiedergewinnung von Regeln aus dem Datenbasissystem zu ermöglichen, das den Klassennamen und den Schlitznamen enthält.

20. Gerät nach Anspruch 19, wobei die in der Regel enthaltene Informationen in einer Vielzahl von Datensätzen (31) gespeichert sind, von denen jeder ein Klassennamenfeld (36) entält und von denen wenigstens einige ein Schlitznamenfeld (37) enthalten, wobei das Datenbasissystem in Antwort auf eine Datenbasisanfrage Datensätze wiedergewinnt, deren Klassennamenfeld-Inhalte dem Klassennamen in den Regelauswahlkriterien der Regel-Wiedergewinnungsanfrage und dem Schlitznamen in der Regel-Wiedergewinnungsanfrage entsprechen.

21. Gerät nach Anspruch 12, wobei die in den Regeln enthaltenen Informationen einen Klassennamen aufweisen und einen Löschbefehl enthalten, der ermöglicht, daß einen gegebenen Klassennamen enthaltende Informationen gelöscht werden, wobei das Inferenzsystem eine Regel-Wiedergewinnungsanfrage erzeugt, die den gegebenen Klassennamen in den Regel-Wiedergewinnungskriterien identifiziert, um dem Wissensanfrageumsetzer zu ermöglichen, in Folge eine Datenbasisanfrage zu erzeugen, um eine Wiedergewinnung von Regeln aus dem Datenbasissystem zu ermöglichen, das den gegebenen Klassennamen enthält.

22. Gerät nach Anspruch 21, wobei die in der Regel enthaltenen Informationen in einer Vielzahl von Datensätzen (31) gespeichert sind, von den jeder ein Klassennamenfeld (36) und ein negiertes Flag (43) enthält, wobei das Datenbasissystem in Antwort auf eine Datenbasisanfrage Datensätze wiedergewinnt, deren Klassennamenfeld-lnhalte dem Klassennamen entsprechen, der in den Regelauswahlkriterien in der Regel-Wiedergewinnungsanfrage enthalten ist, und deren negierte Flags gesetzt sind.

23. Gerät nach Anspruch 21, wobei die in der Regel enthaltenen Informationen einen Schlitznamen aufweist, wobei die durch das Inferenzsystem erzeugte Regel-Wiedergewinnungsanfrage weiterhin den Schlitznamen in den Regelauswahlkriterien identifiziert, was dem Wissensanfrageumsetzer ermöglicht, in Folge eine Datenbasisanfrage zu erzeugen, um eine Wiedergewinnung von Regeln aus dem Datenbasissystem zu ermöglichen, das den Klassennamen und den Schlitznamen enthält.

24. Gerät nach Anspruch 23, wobei die in der Regel enthaltenen Informationen in einer Vielzahl von Datensätzen (31) gespeichert sind, von denen jeder ein Klassennamenfeld (36) enthält und von denen wenigstens enige ein Schlitznamenfeld (37) enthalten, wobei das Datenbasissystem in Antwort auf eine Datenbasisanfrage Datensätze wiedergewinnt, deren Klassennamenfeld-Inhalte dem Klassennamen und dem Schlitznamen in den Regelauswahlkriterien der Regel-Wiedergewinnungsanfrage entsprechen.

25. Gerät nach Anspruch 12, wobei die Regeln Rückwärts-Verkettungsregeln enthalten, die Informationen mit einem Klassennamen aufweisen, wobei die Regeln weiterhin einen Rückwärts-Verkettungsbefehl aufweisen, wobei das Inferenzsystem eine Regel-Wiedergewinnungsanfrage erzeugt, die den Klassennamen in den Regelauswahlkriterien enthält, um dem Wissensanfrageumsetzer zu ermöglichen, in Folge eine Datenbasisanfrage zu erzeugen, um eine Wiedergewinnung von Rückwärts-Verkettungsregeln aus dem Datenbasissystem zu ermöglichen, das den Klassennamen enthält.

26. Gerät nach Anspruch 25, wobei die in den Regeln enthaltenen Informationen in einer Vielzahl von Datensätzen (51) gespeichert sind, von denen jeder ein Klassennamenfeld (56) enthält, wobei das Datenbasissystem in Antwort auf eine Datenbasisanfrage Datensätze wiedergewinnt, deren Klassennamenfeld-Inhalte dem Klassennamen in den Regelauswahlkriterien der Regel-Wiedergewinnungsanfrage entsprechen.

27. Gerät nach Anspruch 25, wobei die in der Regel enthaltenen Informationen weiterhin einen Schlitznamen aufweist, wobei die durch das Inferenzsystem (16) erzeugte Regel-Wiedergewinnungsanfrage weiterhin den Schlitznamen in den Regelauswahlkriterien identifiziert, was dem Wissensanfrageumsetzer ermöglicht, in Folge eine Datenbasisanfrage zu erzeugen, um eine Wiedergewinnung von Rückwärts-Verkettungsregeln aus dem Datenbasissystem zu ermöglichen, das den Klassennamen und den Schlitznamen enthält.

28. Gerät nach Anspruch 27, wobei die Regeln Rückwärts-Verkettungsregeln enthalten, die Informationen enthalten, die in einer Vielzahl von Datensätzen (51) gespeichert sind, von denen jeder ein Klassennamenfeld (56) enthält und von denen wenigstens einige ein Schlitznamenfeld (57) enthalten, wobei das Datenbasissystem in Antwort auf eine Datenbasisanfrage Datensätze wiedergewinnt, deren Klassennamenfeld-Inhalte dem Klassennamen und dem Schlitznamen in den Regelauswahlkriterien der Regel-Wiedergewinnungsanfrage entsprechen.

29. Gerät nach Anspruch 1, wobei die in jeder Regel enthaltenen Informationen einen zugehörigen Namen, eine Relations-Operation und einen Wertausdruck enthalten, wobei jede Regel-Wiedergewinnungsanfrage als Regelauswahlkriterium weiterhin einen Namen enthält, wobei der Wissensanfrageumsetzer (14) die Wiedergewinnung aus dem Datenbasissystem von Regeln (11) mit Informationen ermöglicht, die einen Namen enthalten, der dem bei der Regel-Wiedergewinnungsanfrage enthaltenen Namen entspricht.

30. Gerät nach Anspruch 29, wobei der in den Informationen enthaltene Name einen größeren Teil und einen kleineren Teil aufweist, wobei jede Regel-Wiedergewinnungsanfrage als Auswahlkriterium einen Namen mit einem größeren Teil und einem kleineren Teil enthält, wobei der Wissensanfrageumsetzer (14) eine Regel-Wiedergewinnung unter Verwendung sowohl des größeren Teils als auch des kleineren Teils des Namens ermöglicht.

31. Gerät nach Anspruch 29, wobei das Datenbasissystem folgendes enthält:
A. einen Regelspeicherungsteil (11), der eine Vielzahl von Datensätzen (31, 51) enthält, von denen jeder zum Speichern der in der Regel enthaltenen Informationen vorgesehen ist, wobei der Datensatz ein Namenfeld (36, 37, 56, 57) zum Speichern eines Namens enthält, und
B. einen Datenbasis-Verwaltungsteil zum Wiedergewinen der Inhalte des Regelspeicherungsteils in Antwort auf Datenbasisanfragen vom Wissensanfrageumsetzer, die jeweils einen Namen in den Regelauswahlkriterien enthalten, wobei der Datenbasis-Verwaltungsteil Datensätze aus dem Regelspeicherungsteil wiedergewinnt, deren Namenfeld-Inhalte dem Namen in den Datenbasisanfragen entsprechen.

32. Gerät nach Anspruch 31, wobei jeder Datensatz (31, 51) weiterhin ein Regelidentifikationsfeld (32, 52) zum Speichern der Identifikation einer Regel enthält, wobei der Wissensanfrageumsetzer (14) dem Datenbasis-Verwaltungsteil (13) ermöglicht, in Antwort auf eine Datenbasisanfrage alle Datensätze wiederzugewinnen, die auf die Regel bezogen sind, die durch die Inhalte des Datensatzes identifiziert sind, der den in Antwort auf die Datenbasisanfrage wiedergewonnen Namen enthält.

33. Gerät nach Anspruch 32, wobei der Datensatz (31, 51) weiterhin ein die Informationsfolge in der Regel identifizierendes Ablauffolgen-ldentifikationsfeld (34, 54) enthält, wobei der Wissensanfrageumsetzer (14) einen Regelzuordnungsteil enthält zum Zuordnen einer Regel in der im Ablauffolgen-Identifikationsfeld identifizierten Reihenfolge in Antwort auf den Empfang der Datensätze, die sich auf die Regel beziehen, damit die zugeordnete Regel darauffolgend durch das Inferenzsystem in Verbindung mit einer Inferenzoperation zu verwenden ist.

34. Gerät nach Anspruch 1, das weiterhin einen virtuellen Regelspeicher (18,19) aufweist, wobei der Wissensanfrageumsetzer (14) die wiedergewonnenen Regeln im virtuellen Regelspeicher speichert, und wobei das Inferenzsystem die Inferenzoperation in Verbindung mit den im virtuellen Regelspeicher gespeicherten Regeln durchführt.

35. Gerät nach Anspruch 34, wobei die in jeder der Regeln gespeicherten Informationen einen zugehörigen Namen, eine Relations-Operation und einen Wertausdruck enthalten, wobei jede Regel-Wiedergewinnungsanfrage als Regelauswahlkriterium weiterhin einen Namen enthält, wobei der Regelwiedergewinnungsschritt den Schritt zum Bestimmen enthält, ob eine Regel einen Namen enthält, der dem in der Regel-Wiedergwinnungsanfrage enthaltenen Namen entspricht.

36. Gerät nach Anspruch 35, wobei der zur Information gehörende Name einen größeren Teil und einen kleineren Teil aufweist, und wobei jede Regel-Wiedergewinnungsanfrage als Regelauswahlkriterium einen Namen enthält, der einen größeren Teil und einen kleineren Teil aufweist, wobei der Regel-Wiedergewinnungsschritt die Schritte zum Bestimmen enthält, ob eine Regel Information enthält, die einen größeren Teil enthält, der dem größeren Teil der Auswahlkriterien entspricht, und ob das Regel-Wertausdruck-Element einen kleineren Teil enthält, der dem kleineren Teil der Auswahlkriterien entspricht.

37. Gerät nach Anspruch 35, wobei das Datenbasissystem folgendes enthält:
(i) einen Regelspeicherungsteil, der eine Vielzahl von Datensätzen (31, 51) enthält, von den jeder zum Speichern von in einer Regel enthaltenen Informationen vorgesehen ist, wobei der Datensatz ein Namenfeld (36, 37, 56, 57) zum Speichern eines Namens und ein Regel-Identifikationsfeld (32, 52) zum Speichern der Identifikation einer Regel enthält, und
(ii) einen Datenbasis-Verwaltungsteil (13) zum Wiedergewinnen der Inhalte des Regelspeicherungsteils (11) in Antwort auf Datenbasisanfragen von dem Wissensanfrägeumsetzer (14), die jeweils einen Namen in den Regelauswahlkriterien enthalten, wobei der Datenbasis-Verwaltungsteil Datensätze aus dem Regelspeicherungsteil wiedergewinnt, deren Namenfeld-Inhalte dem Namen in den Datenbasisanfragen entsprechen, wobei der Regel-Wiedergewinnungsschritt den Schritt zum Wiedergewinnen aller Datensätze in Antwort auf eine Datenbasisanfrage enthält, die sich auf die Regel beziehen, die durch die Inhalte des Datensatzes identifiziert ist, der den in Antwort auf die Datenbasisanfrage wiedergewonnenen Namen enthält.

38. Gerät nach Anspruch 37, wobei der Datensatz weiterhin ein die Informationsfolge in der Regel identifizierendes Ablauffolgen-ldentifikationsfeld (34, 54) enthält, wobei der Regel-Wiedergewinnungsschritt den Schritt zum Zuordnen einer Regel enthält, der die Inhalte des Ablauffolgen-ldentifikationsfeldes der wiedergewonnenen Datensätze in Antwort auf den Empfang der sich auf die Regel beziehenden Datensätze verwendet.

39. Verfahren, das folgende Schritte aufweist:
A. Unterhalten eines Datenbasissystems mit einer Vielzahl von Datensätzen (31, 51) zum Speichern von Fakten (12) und Regeln (11), wobei jede der Regeln Informationen enthält, die ausgewertet werden, wenn eine Inferenzoperation in Verbindung mit der Regel durchgeführt wird, wobei die Informationen in wenigstens einem Feld in einem Datensatz gespeichert sind, in dem die Regel gespeichert ist;
B. Zulassen, daß jeder einer Vielzahl von Bedienern auf das Datenbasissystem zugreift, um zu veranlassen, daß die Fakten und die Regeln daraus wiedergewonnen werden, und Verwalten eines Zugriffs auf das Datenbasissystem, um konkurrierende Anfragen von den Bedienern nach einem Zugriff zu den Regeln aufzulösen;
C. Erzeugen einer Regel-Wiedergewinnungsanfrage, die Regelauswahlkriterien enthält, in Antwort auf Befehle von jedem der Bediener;
D. Wiedergewinnen einer Regel aus dem Datenbasissystem in Antwort auf die Regelauswahlkriterien, wenn die Informationen, die in einem Feld des Datensatzes gespeichert sind, in dem die Regel gespeichert ist, Informationen entsprechen, die in den Regelauswahlkriterien der Regel-Wiedergewinnungsanfrage gefunden werden; und
E. Durchführen einer Inferenzoperation in Verbindung mit in Antwort auf die Regelauswahlkriterien wiedergewonnenen Regeln und in Verbindung mit Fakten aus dem Datenbasissystem.

40. Verfahren nach Anspruch 39, wobei die in jeder der Regeln enthaltenen Informationen ein Regelelement enthalten, das wenigstens eine Relations-Operation in Verbindung mit einem Fakt in dem Datenbasissystem und einem Wertausdruck in der Regel identifiziert, wobei der Inferenzoperations-Durchführungsschritt folgende Schritte enthält:
A. Verarbeiten von Regelelementen der Regeln, bei denen alle Regelelemente Wertausdrücke enthalten, die konstante Werte sind, in Verbindung mit Fakten in dem Datenbasissystem, um eine logische Schlußfolgerung zu identifizieren;
B. Verarbeiten von Regelelementen, die Wertausdrücke enthalten, die variable Werte enthalten, von Regeln, die Regelelemente enthalten, deren Wertausdrücke variable Werte enthalten, in Verbindung mit Fakten in dem Datenbasissystem, um eine Verbindungsliste zu erzeugen, um die Werte der variablen Wertausdrücke zu identifizieren, was eine ausgewählte logische Schlußfolgerung schafft; und
C. Verarbeiten von Regelelementen, die Wertausdrücke enthalten, die konstante Werte enthalten, von Regeln, die Regelelemente enthalten, deren Wertausdrücke variable Werte enthalten, in Verbindung mit Fakten in dem Datenbasissystem, um die ausgewählte logische Schlußfolgerung zu schaffen.

## Revendications

1. Appareil de traitement de données comprenant :
A. un système de base de données (10) qui comprend plusieurs enregistrements pour mémoriser des faits (12) et des règles (11) dont chacune contient des informations qui sont évaluées lorsqu'une opération d'inférence est exécutée en relation avec ladite règle, lesdites informations étant mémorisées dans au moins une zone d'un enregistrement dans lequel ladite règle est mémorisée, ledit système de base de données étant accessible par plusieurs opérateurs pour permettre à chacun de ceux-ci de faire en sorte que lesdits faits et lesdites règles soient extraits dudit système de base de données, système de base de données qui comprend des moyens destinés à gérer l'accès audit système de base de données afin de résoudre des demandes conflictuelles émises par lesdits opérateurs pour accéder auxdites règles;
B. un traducteur de demandes de connaissances (14) sensible à des demandes d'extraction de règles pour générer des demandes de base de données afin que des règles puissent être extraites dudit système de base de données, chaque demande d'extraction de règle étant fondée sur des critères de sélection de règle contenus dans ladite demande d'extraction de règle, chacune desdites demandes de base de données entraînant l'extraction d'une règle si lesdites informations mémorisées dans une zone de l'enregistrement dans lequel ladite règle est mémorisée correspondent aux informations qui se trouvent dans lesdits critères de sélection de règle de la demande d'extraction de règle à partir de laquelle ladite demande de base de données a été générée; et
C. un système d'inférence (16, 17) sensible à des ordres provenant de chacun desdits opérateurs, pour générer lesdites demandes d'extraction de règles contenant lesdits critères de sélection de règle, et pour exécuter des opérations d'inférence en relation avec les règles extraites dudit système de base de données (10) par ledit traducteur de demandes de connaissances (14), ledit système d'inférence permettant d'extraire dudit système de base de données des faits destinés à être utilisés en association avec les opérations d'inférence.

2. Appareil tel que défini dans la revendication 1, dans lequel ledit système d'inférence comprend un zone de mémorisation de règles (18, 19) pour permettre de mémoriser des règles, et une machine d'inférence (16, 17) qui génère des demandes d'extraction de règles et exécute des opérations d'inférence en relation avec les règles mémorisées dans ladite zone de mémorisation de règles, ledit traducteur de demandes de connaissances mémorisant les règles extraites en réponse aux demandes d'extraction de règles dans ladite zone de mémorisation de règles.

3. Appareil tel que défini dans la revendication 1, dans lequel ledit système d'inférence comprend :
A. une partie de demandes d'extraction de règles qui génère des demandes d'extraction de règles contenant chacune lesdits critères de sélection de règle; et
B. une partie de traitement de règles qui exécute des opérations d'inférence en relation avec les règles extraites par le traducteur de demandes de connaissances en réponse à la demande d'extraction de règle.

4. Appareil tel que défini dans la revendication 3, dans lequel lesdites informations contenues dans ladite règle identifient au moins une opération relationnelle en relation avec un fait mémorisé dans ledit système de base de données et une expression de valeur contenue dans ladite règle, ladite partie de traitement de règles comprenant :
A. une partie de traitement de constantes destinée à traiter des règles dont les expressions de valeurs sont des valeurs constantes en relation avec des faits mémorisés dans ledit système de base de données pour identifier une conclusion logique;
B. une partie de traitement de variables destinée à traiter des règles dont les expressions de valeurs sont des valeurs variables en relation avec des faits mémorisés dans ledit système de base de données pour générer une liste de liaisons en vue d' identifier les valeurs desdites expressions de valeurs variables qui fournissent une conclusion logique sélectionnée; et
C. une partie de commande destinée à commander le fonctionnement de ladite partie de traitement de constantes et de ladite partie de traitement de variables.

5. Appareil tel que défini dans la revendication 4, dans lequel ladite partie de commande permet d'abord à ladite partie de traitement de constantes de traiter des règles dont toutes les expressions de valeurs sont des valeurs constantes et ensuite à ladite partie de traitement de variables et à ladite partie de traitement de constantes de traiter des règles dont l'une au moins des expressions de valeurs est une valeur variable.

6. Appareil tel que défini dans la revendication 4, dans lequel :
A. la partie de traitement de constantes génère une demande de concordance avec un modèle de constante en réponse à une règle;
B. le traducteur de demandes de connaissances (14) génère une interrogation de base de données en réponse à la demande de concordance avec un modèle de constante, l'interrogation de base de données identifiant la règle; et
C. le système de base de données (10) exécute une opération d'existence en relation avec la règle.

7. Appareil tel que défini dans la revendication 6, dans lequel un règle identifie une relation par un nom de classe et une valeur, le système de base de données exécutant l'opération d'existence en déterminant s'il existe une relation identifiée par le nom de classe et contenant la valeur.

8. Appareil tel que défini par la revendication 7, dans lequel la règle identifie également un nom d'espace associé à la valeur, le système de base de données exécutant également l'opération d'existence en déterminant s'il existe une relation identifiée par le nom de classe et le nom d'espace et contenant la valeur.

9. Appareil tel que défini dans la revendication 4, dans lequel :
A. la partie de traitement de variables génère une demande de concordance avec un modèle de variable en réponse à une règle;
B. le traducteur de demandes de connaissances génère une interrogation de base de données en réponse à la demande de concordance avec un modèle de variable, l'interrogation de base de données identifiant la règle; et
C. le système de base de données exécute une opération de génération de liste de liaisons en relation avec la règle pour identifier des valeurs variables.

10. Appareil tel que défini dans la revendication 9, dans lequel une règle identifie une relation par un nom de classe et une valeur, le système de base de données exécutant l'opération de génération de liste de liaisons en identifiant des valeurs sélectionnées associées à une relation identifiée par le nom de classe.

11. Appareil tel que défini par la revendication 10, dans lequel la règle identifie également un nom d'espace associé à la valeur, le système de base de données exécutant également l'opération de génération de liste de liaisons en identifiant des valeurs sélectionnées associées à une relation identifiée par le nom de classe et le nom d'espace.

12. Appareil tel que défini dans la revendication 1, dans lequel le système d'inférence (16, 17) agit en réponse à des ordres spécifiés par lesdites règles.

13. Appareil tel que défini dans la revendication 12, dans lequel lesdites informations contenues dans chacune desdites règles comprennent un nom de classe, ladite règle comprenant également un ordre de mise à jour qui permet la mise à jour d'informations contenant un nom de classe donné, le système d'inférence (16) générant une demande d'extraction de règle contenant le nom de classe donné inclus dans lesdits critères de sélection de règle pour que le traducteur de demandes de connaissances puisse à son tour générer une demande de base de données afin que des règles contenant le nom de classe donné puissent être extraites du système de base de données.

14. Appareil tel que défini dans la revendication 13, dans lequel les informations contenues dans chacune desdites règles (11) sont mémorisées dans plusieurs enregistrements (31) dont chacun comprend une zone de nom de classe (36), le système de base de données procédant, en réponse à une demande de base de données, à l'extraction d'enregistrements dont le contenu de la zone de nom de classe correspond au nom de classe inclus dans les critères de sélection de la demande d'extraction de règles.

15. Appareil tel que défini dans la revendication 13, dans lequel certaines au moins des règles contiennent des informations comprenant un nom d'espace, la demande d'extraction de règle générée par le système d'inférence identifiant également le nom d'espace inclus dans les critères de sélection de règle permettant au traducteur de demandes de connaissances de générer à son tour une demande de base de données pour que des règles contenant le nom de classe et le nom d'espace puissent être extraites du système de base de données.

16. Appareil tel que défini dans la revendication 15, dans lequel les informations contenues dans chacune desdites règles sont mémorisées dans plusieurs enregistrements (31) dont chacun comprend une zone de nom de classe (36) et dont certains au moins comprennent une zone de nom d'espace (37), le système de base de données procédant, en réponse à une demande de base de données, à l'extraction des enregistrements dont le contenu de la zone de nom de classe correspond au nom de classe et au nom d'espace inclus dans les critères de sélection de règle de la demande d'extraction de règle.

17. Appareil tel que défini dans la revendication 12, dans lequel les informations contenues dans chacune desdites règles comprennent un nom de classe et un ordre de création qui permet la création d'informations contenant un nom de classe donné, le système d'inférence (16) générant une demande d'extraction de règle qui identifie le nom de classe donné inclus dans lesdits critères de sélection de règle pour que le traducteur de demandes de connaissances puisse à son tour générer une demande de base de données afin que des règles contenant le nom de classe donné puissent être extraites du système de base de données.

18. Appareil tel que défini dans la revendication 17, dans lequel les informations contenues dans les règles (11) sont mémorisées dans plusieurs enregistrements (31) dont chacun comprend une zone de nom de classe, le système de base de données procédant, en réponse à une demande de base de données, à l'extraction d'enregistrements (31) dont le contenu de la zone de nom de classe (36) correspond au nom de classe inclus dans les critères de sélection de règle de la demande d'extraction de règle.

19. Appareil tel que défini dans la revendication 17, dans lequel certaines au moins des informations contenues dans les règles comprennent également un nom d'espace, la demande d'extraction de règle générée par le système d'inférence (16) identifiant également le nom d'espace inclus dans lesdits critères de sélection de règle permettant au traducteur de demandes de connaissances de générer à son tour une demande de base de données pour que des règles contenant le nom de classe et le nom d'espace puissent être extraites du système de base de données.

20. Appareil tel que défini dans la revendication 19, dans lequel les informations contenues dans ladite règle sont mémorisées dans plusieurs enregistrements (31) dont chacun comprend une zone de nom de classe (36) et dont certains au moins comprennent une zone de nom d'espace (37), le système de base de données procédant, en réponse à une demande de base de données, à l'extraction d'enregistrements dont le contenu de la zone de nom de classe correspond au nom de classe inclus dans les critères de sélection de règle de la demande d'extraction de règle et au nom d'espace inclus dans la demande d'extraction de règle.

21. Appareil tel que défini dans la revendication 12, dans lequel les informations contenues dans les règles comprennent un nom de classe et un ordre d'effacement permettant l'effacement d'informations contenant un nom de classe donné, le système d'inférence générant une demande d'extraction de règle qui identifie le nom de classe donné inclus dans lesdits critères d'extraction de règle pour que le traducteur de demandes de connaissances puisse à son tour générer une demande de base de données afin que des règles contenant le nom de classe donné puissent être extraites du système de base de données.

22. Appareil tel que défini dans la revendication 21, dans lequel les informations contenues dans ladite règle sont mémorisées dans plusieurs enregistrements (31) dont chacun contient une zone de nom de classe (36) et un drapeau inversé (43), le système de base de données procédant, en réponse à une demande de base de données, à l'extraction d'enregistrements dont le contenu de la zone de nom de classe correspond au nom de classe inclus dans les critères de sélection de règle de la demande d'extraction de règles et dont les drapeaux inversés sont mis à un.

23. Appareil tel que défini dans la revendication 21, dans lequel lesdites informations contenues dans ladite règle comprennent un nom d'espace, la demande d'extraction de règle générée par le système d'inférence identifiant également le nom d'espace inclus dans lesdits critères de sélection de règle permettant au traducteur de demandes de connaissances de générer à son tour une demande de base de données pour que des règles contenant le nom de classe et le nom d'espace puissent être extraites du système de base de données.

24. Appareil tel que défini dans la revendication 23, dans lequel les informations contenues dans ladite règle sont mémorisées dans plusieurs enregistrements (31) dont chacun comprend une zone de nom de classe (36) et dont certains au moins comprennent une zone de nom d'espace (37), le système de base de données procédant, en réponse à une demande de base de données, à l'extraction d'enregistrements dont le contenu de la zone de nom de classe correspond au nom de classe et au nom d'espace inclus dans les critères de sélection de règle de la demande d'extraction de règle.

25. Appareil tel que défini dans la revendication 12, dans lequel les règles comprennent des règles de chaînage arrière contenant des informations qui comportent un nom de classe, lesdites règles comprenant également un ordre de chaînage arrière, le système d'inférence générant une demande d'extraction de règle comprenant le nom de classe inclus dans lesdits critères de sélection de règle pour que le traducteur de demandes de connaissances puisse à son tour générer une demande de base de données afin que des règles de chaînage arrière contenant le nom de classe puissent être extraites du système de base de données.

26. Appareil tel que défini dans la revendication 25, dans lequel lesdites informations contenues dans les règles sont mémorisées dans plusieurs enregistrements (51) dont chacun comprend une zone de nom de classe (56), le système de base de données procédant, en réponse à une demande de base de données, à l'extraction d'enregistrements dont le contenu de la zone de nom de classe correspond au nom de classe inclus dans lesdits critères de sélection de règle de la demande d'extraction de règle.

27. Appareil tel que défini dans la revendication 25, dans lequel lesdites informations contenues dans ladite règle comprennent également un nom d'espace, la demande d'extraction de règle générée par le système d'inférence (16) identifiant également le nom d'espace inclus dans lesdits critères de sélection de règle permettant au traducteur de demandes de connaissances de générer à son tour une demande de base de données pour que des règles de chaînage arrière contenant le nom de classe et le nom d'espace puissent être extraites du système de base de données.

28. Appareil tel que défini dans la revendication 27, dans lequel les règles comprennent des règles de chaînage arrière contenant des informations mémorisées dans plusieurs enregistrements (51) dont chacun comprend une zone de nom de classe (56) et dont certains au moins comprennent une zone de nom d'espace (57), le système de base de données procédant, en réponse à une demande de base de données, à l'extraction d'enregistrements dont le contenu de la zone de nom de classe correspond au nom de classe et au nom d'espace inclus dans lesdits critères de sélection de règle de la demande d'extraction de règle.

29. Appareil tel que défini dans la revendication 1, dans lequel lesdites informations contenues dans chacune desdites règles comprennent un nom associé, une opération relationnelle et une expression de valeur, chaque demande d'extraction de règle comprenant également, comme critère de sélection de règles, un nom, ledit traducteur de demandes de connaissances (14) permettant que soient extraites du système de base de données les règles (11) contenant des informations qui comportent un nom correspondant au nom inclus dans la demande d'extraction de règle.

30. Appareil tel que défini dans la revendication 29, le nom contenu dans lesdites informations comprenant une partie majeure et une partie mineure, chaque demande d'extraction de règle comprenant, comme critère de sélection, un nom comprenant une partie majeur et une partie mineure , ledit traducteur de demandes de connaissances (14) permettant une extraction de règles grâce à la fois à la partie majeure et à la partie mineure dudit nom.

31. Appareil tel que défini dans la revendication 29, dans lequel ledit système de base de données comprend :
A. une partie de mémorisation de règles (11) comprenant plusieurs enregistrements (31, 51) dont chacun est destiné à mémoriser lesdites informations contenues dans chacune desdites règles, ledit enregistrement comprenant une zone de nom (36, 37, 56, 57) pour mémoriser un nom, et
B. une partie de gestion de base de données pour extraire le contenu de ladite partie de mémorisation de règles en réponse à des demandes de base de données provenant dudit traducteur de demandes de connaissances contenant chacune un nom inclus dans lesdits critères de sélection de règle, la partie de gestion de base de données procédant à l'extraction d'enregistrements de ladite partie de mémorisation de règles, dont le contenu des zones de nom correspond au nom contenu dans lesdites demandes de base de données.

32. Appareil tel que défini dans la revendication 31, dans lequel chaque enregistrement (31, 51) comprend également une zone d'identification de règle (32, 52) destinée à mémoriser l'identification d'une règle, ledit traducteur de demandes de connaissances (14) permettant à la partie de gestion de base de données (13) d'extraire, en réponse à une demande de base de données, tous les enregistrements concernant la règle identifiée par le contenu de l'enregistrement contenant le nom extrait en réponse à la demande de base de données.

33. Appareil tel que défini dans la revendication 32, ledit enregistrement (31, 51) comprenant également une zone d'identification de séquence (34, 54) qui identifie la séquence desdites informations contenues dans ladite règle, ledit traducteur de demandes de connaissances (14) comprenant une partie d'assemblage de règle destinée à assembler une règle dans l'ordre identifié dans la zone d'identification de séquence en réponse à la réception des enregistrements concernant la règle, la règle assemblée étant destinée à être utilisée ensuite par le système d'inférence en relation avec une opération d'inférence.

34. Appareil tel que défini dans la revendication 1, comprenant également une mémoire virtuelle de règles (18, 19), ledit traducteur de demandes de connaissances (14) mémorisant les règles extraites dans ladite mémoire virtuelle de règles, et ledit système d'inférence exécutant lesdites opérations d'inférence en relation avec lesdites règles mémorisées dans ladite mémoire virtuelle de règles.

35. Appareil tel que défini dans la revendication 34, lesdites informations contenues dans chacune desdites règles comprenant un nom associé, une opération de relation et une expression de valeur, chaque demande d'extraction de règle comprenant également, comme critère de sélection de règle, un nom, l'étape d'extraction de règle comprenant l'étape qui consiste à déterminer si une règle contient un nom correspondant au nom inclus dans la demande d'extraction de règle.

36. Appareil tel que défini dans la revendication 35, le nom associé auxdites informations possédant une partie majeure et une partie mineure et chaque demande d'extraction de règle comprenant, comme critère de sélection de règle, un nom possédant une partie majeure et une partie mineure, l'étape d'extraction de règle comprenant les étapes qui consistent à déterminer si une règle contient des informations comprenant une partie majeure correspondant à la partie majeure desdits critères de sélection, et ledit élément d'expression de valeur de règle comportant une partie mineure correspondant à la partie mineure desdits critères de sélection.

37. Appareil tel que défini dans la revendication 35, dans lequel ledit système de base de données comprend
(i) une partie de mémorisation de règles qui comprend plusieurs enregistrements (31, 51) dont chacun est destiné à mémoriser des informations contenues dans une règle, ledit enregistrement comprenant une zone de nom (36, 37, 56, 57) pour mémoriser un nom, et une zone d'identification de règle (32, 52) pour mémoriser l'identification d'une règle, et
(ii) une partie de gestion de base de données (13) destinée à extraire le contenu de ladite partie de mémorisation de règles (11) en réponse à des demandes de base de données provenant dudit traducteur de demandes de connaissances (14) contenant chacune un nom inclus dans lesdits critères de sélection de règle, la partie de gestion de base de données procédant à l'extraction d'enregistrements de ladite partie de mémorisation de règles, dont le contenu des zones de nom correspond au nom contenu dans lesdites demandes de base de données, ladite étape d'extraction de règle comprenant l'étape qui consiste à extraire, en réponse à une demande de base de données, tous les enregistrements concernant la règle identifiée par le contenu de l'enregistrement contenant le nom extrait en réponse à la demande de base de données.

38. Appareil tel que défini dans la revendication 37, ledit enregistrement contenant également une zone d'identification de séquence (34, 54) qui identifie la séquence desdites informations contenues dans ladite règle, ladite étape d'extraction de règle comprenant l'étape qui consiste à assembler une règle, à l'aide du contenu de la zone d'identification de séquence des enregistrements extraits en réponse à la réception des enregistrements concernant la règle.

39. Méthode comprenant les étapes qui consistent à:
A. conserver un système de base de données comprenant plusieurs enregistrements (31, 51) pour mémoriser des faits (12) et des règles (11) dont chacune contient des informations qui sont évaluées lorsqu'une opération d'inférence est exécutée en relation avec ladite règle, lesdites informations étant mémorisées dans au moins une zone d'un enregistrement dans lequel ladite règle est mémorisée;
B. permettre à chacun de plusieurs opérateurs d'accéder audit système de base de données pour faire en sorte que certains faits et certaines règles soient extraits de celui-ci, et à gérer l'accès audit système de base de données pour résoudre des demandes conflictuelles émises par lesdites opérateurs pour accéder auxdites règles;
C. générer une demande d'extraction de règle comportant des critères de sélection de règle en réponse à des ordres provenant de chacun desdits opérateurs;
D. extraire une règle dudit système de base de données en réponse aux critères de sélection de règle si lesdites informations mémorisées dans une zone de l'enregistrement dans lequel ladite règle est mémorisée correspondent aux informations qui se trouvent dans lesdits critères de sélection de règle de la demande d'extraction de règle; et
E. exécuter une opération d'inférence en relation avec lesdites règles extraites en réponse aux critères de sélection de règle et en relation avec des faits provenant dudit système de base de données.

40. Méthode telle que définie dans la revendication 39, lesdites informations contenues dans chacune desdites règles comprenant un élément de règle qui identifie au moins une opération relationnelle en relation avec un fait mémorisé dans ledit système de base de données, et une expression de valeur contenue dans ladite règle, méthode selon laquelle l'étape d'exécution d'opération d'inférence comprend les étapes qui consistent à :
A. traiter des éléments de règles dont tous les éléments contiennent des expressions de valeurs qui sont des valeurs constantes en relation avec des faits mémorisés dans ledit système de base de données pour identifier une conclusion logique;
B. traiter des éléments qui contiennent des expressions de valeurs comprenant des valeurs variables, de règles qui comportent des éléments dont les expressions de valeurs comprennent des valeurs variables, en relation avec des faits mémorisés dans ledit système de base de données pour générer une liste de liaisons afin d'identifier les valeurs desdites expressions de valeurs variables qui fournissent une conclusion logique sélectionnée; et
C. traiter des éléments qui contiennent des expressions de valeurs comprenant des valeurs constantes, de règles qui comportent des éléments dont les expressions de valeurs comprennent des valeurs variables, en relation avec des faits mémorisés dans ledit système de base de données pour fournir ladite conclusion logique sélectionnée.
